# EUROPEAN PATENT SPECIFICATION

(11) **EP 4 068 937 B1**
(45) Date of publication and mention of the grant of the patent: **18.06.2025**
(21) Application number: 20895804.1
(22) Date of filing: 27.11.2020
(51) Int. Cl.: A01B 33/02, A01B 63/00, A01B 73/04, A01B 73/06

(54) **VARIABLE TILLAGE IMPLEMENT**
VARIABLES BODENBEARBEITUNGSGERÄT
OUTIL DE TRAVAIL DU SOL VARIABLE

(30) Priority: 05.12.2019 US 201962943863 P
(43) Date of publication of application: 12.10.2022
(73) Proprietor: Salford Group Inc., Salford, Ontario N0J 1W0 (CA)
(72) Inventor: GRAY, Geof J, Burfurd, Ontario N0E1A0 (CA); ROZENDAAL, Jacobus A., Delhi, Ontario N0E 1H0 (CA); AVERINK, John Mark, Norwich, Ontario N0J 1P0 (CA); RODIONOV, Mikhail, York, Ontario M2P 1N1 (CA); BAKER, Bradley William, Stratford, Ontario N5A 6J8 (CA); HOEVE, Frens, Tillsonburg, Ontario N4G 4G8 (CA); PASMA, Chad Derek, Beachville, Ontario N0J1A0 (CA); POPPE, Christopher Michael, Mitchell, Ontario N0K 1N0 (CA); WRIGHT, Frederick Kristoffer Gordon, Thomas, Ontario N5R 6L9 (CA); CLAUSSEN, Magnus, London, Ontario N5V 5G6 (CA)
(74) Representative: ZBM Patents - Zea, Barlocci & Markvardsen
(86) International application number: PCT/CA2020/051633
(87) International publication number: WO 2021/108898

(56) References cited:
- CA-A1- 2 883 425
- CA-A1- 2 883 425
- US-A- 4 066 274
- US-A- 4 180 135
- US-A- 4 180 135
- US-A1- 2008 110 649
- US-A1- 2016 212 928
- US-A1- 2017 079 189

## Description

### Field

This application relates to agriculture, in particular to a tillage implement for performing variable tillage.

### Background

Tillage implements for tilling soil in a field typically comprise a frame with one or more tillage tools of one or more types mounted on the frame in a position and orientation in which the tillage tools can engage the field in order to till the soil. The frames are often large to provide room for mounting a plurality of tillage tools in the same transverse row on the frame to provide a broader tilling swath. In many cases, the plurality of tillage tools in a transverse row are mounted in a gang on a common toolbar, the tool bar being mounted on the frame to facilitate mounting and exchanging large numbers of tillage tools in a shorter period of time so that the same frame can be used for different tillage operations. The frame also typically comprises a plurality of transverse rows of tillage tools longitudinally spaced-apart on the frame to provide greater intensity of tillage so that multiple passes with the implement over the same locations on the field are not required. The angles of engagement of the tillage tools with the field are usually set prior to tilling when the tillage tools are mounted on the frame, and cannot be readily changed in response to different field conditions during a tillage operation.

Further, multiple frame sections transversely set apart from each other may be utilized to increase the width of the frame. Utilizing multiple frame sections provides the opportunity to include an arrangement for folding frame sections into a storage position when the tillage implement is not in use to facilitate storage of the implement in a machine shop or yard. While the ability to fold frame sections into a vertical position facilitates storage of the implement and permits a limited ability to transport the implement along a roadway over short distances, vertically folded frame sections still impose difficulties in transporting fully assembled implements over long distances on roadways, particularly on roadways which pass under bridges and the like that have maximum height limitations. To overcome the maximum height limitations, manufacturers generally ship tillage implements in a disassembled state where outer frame sections are disconnected from the rest of the frame. Consequently, when the implement arrives at a customer, the implement must be assembled, which can be laborious and difficult for the customer.

A number of tillage implements have been developed that provide the ability to rotate a gang of tillage tools through an angle of 0° to 15°, with respect to a transverse axis of the frame, to provide less or more aggressive angles of engagement of the tillage tools with the field. However, such implements suffer from large longitudinal spacing requirements between longitudinally adjacent gangs of tillage tools, thereby requiring longer frames, which is undesirable when the frame has frame sections which are folded up for transport on a roadway. Such implements are required to be shipped in the disassembled state, and then reassembled by the customer.

There remains a need for a tillage implement having variable tillage capability and a shorter frame that is compact enough while remaining assembled for convenient roadway transportation when outer transverse sections (i.e. wing sections) of the frame are folded for storage and transportation.

US4180135A discloses, according to its abstract, a hydraulic mechanism for varying the angular relationship between a pair of adjacent end-connected disc harrow gangs which uses the same power source that ordinarily is employed for raising and lowering the harrow frame structure as a power source to actuate the gang angling mechanism. A bell crank lever mechanism embodying a pivot shaft, trailing wheel axle arms, and a crank arm, has the latter arm connected to the power source so that when the crank arm is swung in opposite fore and aft directions, the frame structure is raised or lowered. The gang angling mechanism embodies floating links which are connected at one end to the crank arm and which pass slidingly through the pivotal juncture between the end-connected gangs, together with removable abutment members which, when applied to the floating links in the vicinity of such junctures, engages the latter when the power source is actuated in one direction or the other and forces the juncture in a direction either to increase or decrease the angular gang relationship, depending upon whether the abutment members are applied forwardly or rearwardly of the juncture.

CA2883425A1 discloses a tillage implement. US2008/110649A1 discloses a folding disk with wing stabilizer wheels. US2016/212928A1 discloses an agricultural tillage implement. US4066274A discloses a tandem folding implement. US2017/079198A1 discloses an agricultural vehicle pneumatic distribution system.

### Summary

A tillage implement is provided comprising: a frame connectable to a towing vehicle, the frame comprising a plurality of elongated transverse frame elements and a plurality of elongated longitudinal frame elements connected to the plurality of elongated transverse frame elements, the frame having a horizontal longitudinal axis parallel to a direction of travel of the tillage implement and a horizontal transverse axis perpendicular to the horizontal longitudinal axis when the tillage implement is in a deployed configuration to till a field; a first gang comprising a first toolbar and a first plurality of annular harrow tools mounted on the first toolbar, the first toolbar having a first vertical toolbar plane through a length of the first toolbar, each annular harrow tool of the first plurality of annular harrow tools having a first rotating circumferential cutting edge whereby a first vertical harrow tool plane passes through two diametrically opposed points on the first circumferential cutting edge, the first toolbar pivotally mounted on the frame to be rotatable about a first vertical rotation axis; a second gang comprising a second toolbar and a second plurality of annular harrow tools mounted on the second toolbar, the second toolbar having a second vertical toolbar plane through a length of the second toolbar, each annular harrow tool of the second plurality of annular harrow tools having a second rotating circumferential cutting edge whereby a second vertical harrow tool plane passes through two diametrically opposed points on the second circumferential cutting edge, the second toolbar pivotally mounted on the frame to be rotatable about a second vertical rotation axis; a linkage mechanism disposed longitudinally between the first and second toolbars, the linkage mechanism comprising a plurality of pivotally connected linkage arms, the first and second toolbars each pivotally connected to the linkage mechanism, operation of the linkage mechanism simultaneously rotating the first toolbar about the first vertical rotation axis and rotating the second toolbar about the second vertical rotation axis in an opposite rotational direction as the first toolbar; and, at least one wheel for supporting the frame on the field, the at least one wheel mounted on the frame longitudinally forward of both the first and second gang or longitudinally rearward of both the first and second gang.

There is also provided a tillage implement comprising: a frame connectable to a towing vehicle, the frame comprising a plurality of elongated transverse frame elements and a plurality of elongated longitudinal frame elements connected to the plurality of elongated transverse frame elements, the frame having a horizontal longitudinal axis parallel to a direction of travel of the tillage implement and a horizontal transverse axis perpendicular to the horizontal longitudinal axis when the tillage implement is in a deployed configuration to till a field; and, a gang comprising a toolbar and a plurality of compound angle annular harrow tools mounted on the toolbar, the toolbar pivotally mounted on the frame to be rotatable about a vertical rotation axis, each annular harrow tool of the plurality of annular harrow tools having a rotating circumferential cutting edge whereby a vertical harrow tool plane through two diametrically opposed points on the circumferential cutting edge is non-parallel to the longitudinal axis and a plane formed by a circumference of the annular harrow tool is non-parallel to the vertical harrow tool plane.

Variable tillage involves changing a position of a tillage tool between an aggressive tillage position where the soil is tilled to a greater extent and a non-aggressive tillage position where the soil is tilled to a lesser extent. Depending on soil conditions, aggressive or non-aggressive tillage may be required. Because soil conditions are not the same throughout a field, it is useful to be able to change the aggressiveness of the tillage tool on the fly. Where the tillage tool comprises an annular harrow tool (e.g. disc harrows, coulter blades, rotary aeration tines and the like), an aggressive tillage position involves angling the annular harrow so that a cutting edge of the annular harrow tool is less parallel to a direction of travel of the tillage implement, while a non-aggressive tillage position involves angling the annular harrow tool so that the cutting edge of the annular harrow tool is more parallel, preferably parallel, to a direction of travel of the tillage implement. Therefore, a tillage implement on which the angle of the annular harrow tool can be changed on the fly is useful to provide a variable tillage capability.

Longitudinally adjacent gangs of tillage tools mounted on frame sections of tillage implements of the prior art are longitudinally separated by a sufficient distance to provide maximum soil flow through the implement when the tillage tools are in the most aggressive tillage position in order to reduce plugging. However, due to constraints on the design of the prior art tillage implements, the longitudinally adjacent gangs of tillage tools are longitudinally separated by a distance larger than is required to obtain maximum soil flow through the implement when the tillage tools are in the most aggressive tillage. Thus, the frames of the prior art implements are long, leading to an inability to transport the implement along a roadway with the frame sections fully assembled on the implement.

In the present invention, longitudinally adjacent gangs of tillage tools are longitudinally spaced at a minimum distance to obtain maximum soil flow through the implement when the tillage tools are in the most aggressive tillage position in order to reduce plugging. Further, when the longitudinally adjacent gangs of tillage tools are rotated so that the tillage tools are in the least aggressive tillage position, the relative transverse position of the point at which the leading cutting edge of each of the tillage tools contacts the field shifts to provide an equidistant or nearly equidistant transverse spacing between the cutting edges of the tillage tools on the first gang in relation to the cutting edges of the tillage tools on the second gang.

In some embodiments, the tillage implement further comprises an actuator connected to at least one of the linkage arms of the linkage mechanism. The actuator may be mounted on the frame. Operation of the actuator operates the linkage mechanism. Operation of the linkage mechanism rotates the first and second toolbars about respective vertical rotation axes. The actuator may be controlled from the towing vehicle towing the implement, or from any other suitable location, for example remotely from an office. Any suitable actuator may be used, for example a hydraulic cylinder, a linear actuator, a pneumatic actuator, a mechanical actuator (e.g. a lever) or the like.

In some embodiments, the first gang comprises a first gang assembly comprising the first toolbar, a first support bar opposed to the first toolbar and at least two first support brackets rigidly connecting the first toolbar to the first support bar. In some embodiments, the second gang comprises a second gang assembly comprising the second toolbar, a second support bar opposed to the second toolbar and at least two second support brackets rigidly connecting the second toolbar to the second support bar. The plurality of linkage arms may comprise a transversely oriented common control rod pivotally connected to the first and second gangs, for example through at least two connecting arms pivotally mounted on the control rod. In some embodiments, the actuator is pivotally connected to the control rod whereby actuation of the actuator causes the first and second toolbars to rotate in opposite rotational directions about the first and second vertical rotation axes, respectively.

In some embodiments, the actuator is pivotally attached to the first support bar and the control rod at a common location. The at least two connecting arms may comprise one connecting arm pivotally connected to the control rod and the second support bar. The first and second gang assemblies may each comprise at least two gang assembly linkage arms. The gang assembly linkage arms may be pivotally connected to the first support bar and at least one of the transverse frame elements.

In some embodiments, the at least two connecting arms comprises two connecting arms. One of the connecting arms may be pivotally connected to the control rod and the first support bar. One of the connecting arms may be pivotally connected to the control rod and the second support bar. The two connecting arms pivotally may be connected to the control rod at a common location. In some embodiments, the first and second support bars are each rotatably connected to the transverse frame elements at first and second pivot points, respectively, through which the first and second vertical rotation axes pass, respectively.

In some embodiments, the plurality of linkage arms comprises a bell crank control linkage.

In some embodiments, the first and second pluralities of annular harrow tools are in a least aggressive tillage position when the first and second vertical harrow tool planes are parallel to the longitudinal axis. Further, the first vertical harrow tool planes are parallel to and transversely offset equidistantly or nearly equidistantly from adjacent second vertical harrow tool planes when the first and second pluralities of annular harrow tools are in the least aggressive tillage position. Relative transverse positions of points at which the rotating circumferential cutting edges of the first and second pluralities of annular harrow tools first contact the field shift transversely to provide the equidistant or nearly equidistant transverse offset when the first and second gangs are rotated so that the first and second pluralities of annular harrow tools are in the least aggressive tillage position.

In some embodiments, each of the first and second gangs are rotatable through an angle of 16°. When the first and second gangs each form an angle of 0° with respect to the horizontal transverse axis, the first vertical harrow tool plane forms an angle in a range of from 0° to 16°, preferably from 8° to 16°, with respect to the horizontal longitudinal axis and the second vertical harrow tool plane forms an angle in a range of from 0° to -16°, preferably from -8° to -16°, with respect to the horizontal longitudinal axis. In some embodiments, the first vertical harrow tool plane forms an angle in a range of from 0° to 16°, preferably from 8° to 16°, with respect to a first line normal to the first vertical toolbar plane; and, the second vertical harrow tool plane forms an angle in a range of from 0° to 16°, preferably from 8° to 16° with respect to a second line normal to the second vertical toolbar plane.

In some embodiments, the at least one wheel comprises a plurality of wheels, for example two, three, four, five or more wheels. In some embodiments, the at least one wheel is mounted longitudinally forward of both the first and second gang. Positioning the at least one wheel longitudinally forward or rearward of both the first and second gang helps shorten the frame, provides space for the linkage mechanism and permits the linkage mechanism to operate to rotate both the first and second toolbars simultaneously.

In some embodiments, the frame comprises at least one wing section on which the first and second gangs are mounted and a wing support. The wing section may be pivotally mounted on the wing support and the wing support pivotally mounted on the frame such that the wing section and the wing support are pivotable between the deployed configuration where the wing section is horizontally oriented and the first and second gangs are oriented transversely to the longitudinal axis and a stowed position where the wing section is vertically oriented and the first and second gangs are oriented parallel to the longitudinal axis. The at least one wing section may comprise one, two, three, four or more wing sections. In one embodiment, the at least one wing section comprises a first wing section pivotally mounted on a first side of the wing support and a second wing section substantially identical to the first wing section, the second wing section pivotally mounted on the wing support on a second side transversely opposite the first side.

In some embodiments, the wing support may be a center section of the frame, which can also support various tillage tools, for example a further plurality of annular harrow tools. The further plurality of annular harrow tools may be mounted as center gangs on the center section. The center gangs on the center section may also be rotatable using a linkage mechanism such as the type of linkage mechanism used to rotate the first and second gangs on the at least one wing section.

In some embodiments, the at least one wing section comprises further gangs substantially identical to and transversely spaced-apart from the first and second gangs. The first and second and further gangs may be controlled by the same linkage mechanism, the linkage mechanism also disposed longitudinally between pairs of the further gangs. For example, the at least one wing section may further comprise a third gang and a fourth gang substantially identical to the first gang and the second gang, respectively, and transversely spaced-apart from the first and second gangs, the third and fourth gangs connected to the linkage mechanism, the linkage mechanism disposed longitudinally between the third and fourth gangs. Similarly, where a center section is present, the center section may comprise further center gangs.

The tillage implement has variable tillage capability and a shorter frame that is compact enough while remaining assembled for convenient roadway transportation when outer transverse sections (i.e. wing sections) of the frame are folded for storage and transportation.

Further features will be described or will become apparent in the course of the following detailed description.

### Brief Description of the Drawings

For clearer understanding, preferred embodiments will now be described in detail by way of example, with reference to the accompanying drawings, in which:
Fig. 1 depicts a top view of a three-piece tillage implement in a deployed configuration to till a field, the tillage implement comprising a frame having a center section, a first wing section pivotally mounted on a left side of the center section and a second wing section pivotally mounted on a right side of the center section.
Fig. 2A depicts a right-side view of the tillage implement of Fig. 1 folded into a storage and transport configuration and hitched to a tractor.
Fig. 2B depicts a rear view of Fig. 2A.
Fig. 3A depicts a left-side view of a two-piece tillage implement comprising a frame having a wing support, a first wing section pivotally mounted on a left side of the wing support and a second wing section pivotally mounted on a right side of the wing support, the tillage implement folded into a storage and transport configuration and hitched to a tractor.
Fig. 3B depicts a rear view of Fig. 3A.
Fig. 4 depicts the two-piece tillage implement of Fig. 3A unhitched from the tractor and loaded on to a drop-deck flat-bed transport trailer.
Fig. 5 depicts the two-piece tillage implement of Fig. 3A unhitched from the tractor and loaded on to a double-drop flat-bed transport trailer.
Fig. 6A depicts a top view of a first wing section of a frame of a tillage implement transversely adjacent a second wing section of the frame showing flat coulter blades mounted in pairs in gangs on the wing sections.
Fig. 6B depicts a rear view of Fig. 6A.
Fig. 7A a top view of a first wing section of a frame of a tillage implement transversely adjacent a second wing section of the frame showing concave disc harrows mounted in gangs on the wing sections.
Fig. 7B depicts a rear view of Fig. 7A.
Fig. 8A depicts a top view of a first wing section of a frame of a tillage implement transversely adjacent a second wing section of the frame showing 13-wave coulter blades mounted in pairs in gangs on the wing sections.
Fig. 8B depicts a rear view of Fig. 8A.
Fig. 9A depicts a top view of a first wing section of a frame of a tillage implement transversely adjacent a second wing section of the frame showing 8-wave coulter blades mounted in pairs in gangs on the wing sections.
Fig. 9B depicts a rear view of Fig. 9A.
Fig. 10A depicts a top view of a first wing section of a frame of a tillage implement showing a double link linkage mechanism connected to front and rear gangs of annular harrow tools of the first wing section.
Fig. 10B depicts a gang assembly mountable on an elongated transverse frame element, the gang assembly adapted to be pivotally connected to the double link linkage mechanism shown in Fig. 10A.
Fig. 11A depicts a top view of a first wing section of a frame of a tillage implement showing a center pivot linkage mechanism connected to front and rear gangs of annular harrow tools of the first wing section.
Fig. 11B depicts a gang assembly mountable on an elongated transverse frame element, the gang assembly adapted to be pivotally connected to the center pivot linkage mechanism shown in Fig. 11A.
Fig. 12A depicts a top view of a control linkage of the center pivot linkage mechanism shown in Fig. 11A.
Fig. 12B depicts a front view of Fig. 12A.
Fig. 13A depicts a top view of a first wing section of a frame of a tillage implement showing an alternative center pivot linkage mechanism connected to front and rear gangs of annular harrow tools of the first wing section.
Fig. 13B depicts a top view of a control linkage of the center pivot linkage mechanism shown in Fig. 13A.
Fig. 14A depicts a top view of a first wing section of a frame of a tillage implement transversely adjacent a second wing section of the frame showing front and rear gangs of annular harrow tools in which long axes of toolbars of the front gangs are angled at -2° with respect to a transverse axis of the implement and the annular harrow tools of the front gangs are angled at -14° with respect to a longitudinal axis of the implement.
Fig. 14B depicts Fig. 14A except that the front gangs are angled at 0° with respect to the transverse axis and the annular harrow tools of the front gangs are angled at -12° with respect to the longitudinal axis.
Fig. 14C depicts Fig. 14A except that the front gangs are angled at 10° with respect to the transverse axis and the annular harrow tools of the front gangs are angled at -2° with respect to the longitudinal axis.
Fig. 15A, Fig. 15B and Fig. 15C depicts top views of front and rear gangs of annular harrow tools connected by the double link linkage mechanism shown in Fig. 10 illustrating how the gangs rotate about virtual vertical rotation axes as the gangs are simultaneously rotated by the linkage mechanism to rotate the annular harrow tools through an angle of 14° with respect to a longitudinal axis of the tillage implement.
Fig. 16 depicts the locations in space of virtual vertical rotation axes of toolbars of the front and rear gangs show in Fig. 15A to Fig. 15C when the toolbars are rotated.
Fig. 17A, Fig. 17B and Fig. 17C depicts top views of front and rear gangs of annular harrow tools connected by the center pivot linkage mechanism shown in Fig. 11 illustrating how the gangs pivot about a real pivot point as the gangs are simultaneously rotated by the linkage mechanism to rotate the annular harrow tools through an angle of 14° with respect to a longitudinal axis of the tillage implement.
Fig. 18A and Fig. 18B depict top views of front and rear gangs of annular harrow tools illustrating that when toolbars of the gangs are parallel or close to parallel with a transverse axis of the tillage implement (Fig. 18A), the annular harrow tools are in an aggressive tillage position angled away from a longitudinal axis of the tillage implement, while when the annular harrow tools are in a least aggressive tillage position parallel to the longitudinal axis (Fig. 18B), the toolbars are angled away from the transverse axis of the tillage implement.
Fig. 18C depicts a single gang of annular harrow tools shown in an aggressive tillage position (upper) and a non-aggressive tillage position (lower) illustrating how relative transverse positions of points at which the cutting edges of the annular harrow tools first contact the field shift transversely when the toolbar is rotated between the aggressive tillage position (upper) and the non-aggressive tillage position (lower).
Fig. 19A depicts a top view of how annular harrow tools in front and rear gangs are arranged when the annular harrow tools are in a least aggressive tillage position and toolbars of the gangs are angled away from a transverse axis of the tillage implement.
Fig. 19B depicts a front view of the Fig. 19A.
Fig. 20A depicts a top view of how annular harrow tools in front and rear gangs are arranged when the annular harrow tools are in a most aggressive tillage position and toolbars of the gangs are parallel or almost parallel with a transverse axis of the tillage implement.
Fig. 20B depicts a front view of the Fig. 20A.
Fig. 21A depicts a top view of a compound angle annular harrow tool mounted on a toolbar.
Fig. 21B depicts a front view of Fig. 21A.
Fig. 22A depicts a top view of a front gang of compound angle annular harrow tools showing the angle the compound angle harrow tools make with respect to a longitudinal axis of the tillage implement.
Fig. 22B depicts a rear view of the front gang shown in Fig. 22A showing the angle the compound angle harrow tools make with respect to a vertical axis of the tillage implement

### Detailed Description

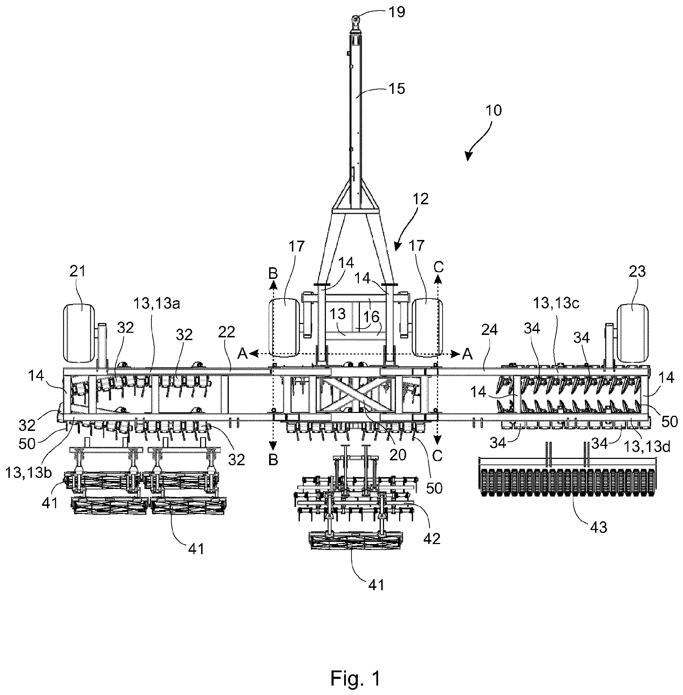

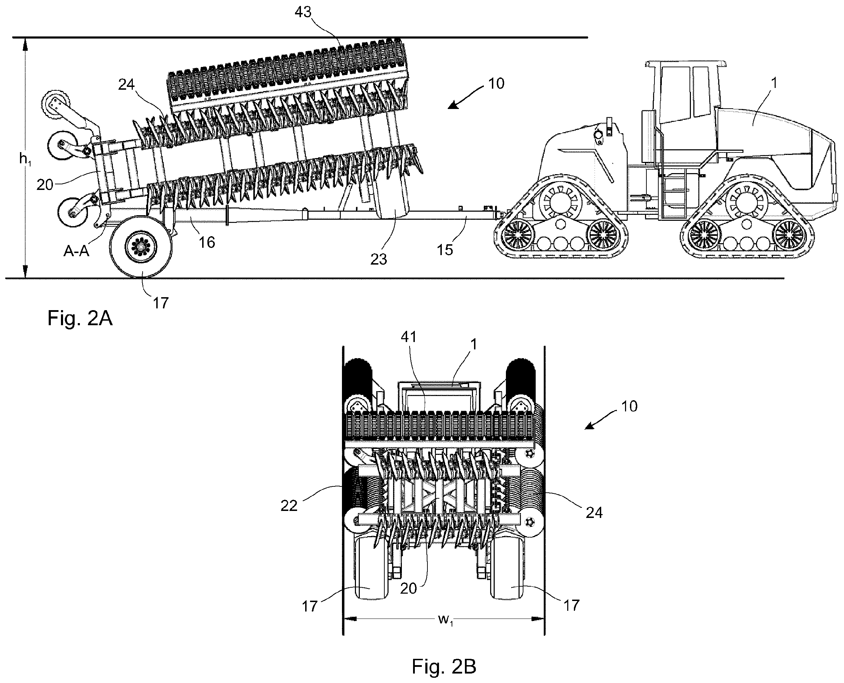

A three-section tillage implement **10** in accordance with one embodiment of the present invention is illustrated in Fig. 1, Fig. 2A and Fig. 2B, omitting linkage mechanisms for clarity. The three-section tillage implement **10** comprises a frame **12** comprising a plurality of elongated transverse frame elements **13** (only five labeled in Fig. 1) and a plurality of elongated longitudinal frame elements **14** (only five labeled in Fig. 1) rigidly connected together. The frame **12** has a horizontal longitudinal axis parallel to a direction of travel of the tillage implement **10** and a horizontal transverse axis perpendicular to the horizontal longitudinal axis when the tillage implement **10** is in a deployed configuration to till a field. Fig. 1 depicts the deployed configuration. The tillage implement **10** travels in a longitudinally forward direction. The frame **12** comprises a chassis **16.** A pair of ground-engaging wheels **17** for supporting the chassis **16** on the ground are rotatably mounted on opposite transverse sides of the chassis **16.** A tongue **15** of the tillage implement **10** is connected to the chassis **16** and extends in the longitudinally forward direction from the chassis **16** terminating in a hitch **19** for connecting the tillage implement **10** to a towing vehicle 1, for example a tractor or a truck.

The frame **12** further comprises a wing support in the form of a center section **20** pivotally connected to a rear of the chassis **16** so that the center section **20** can pivot vertically about a center section pivot axis **A-A,** which is parallel to the horizontal transverse axis of the frame **12.**

The frame **12** further comprises a first wing section **22** and a second wing section **24.** A proximal transverse end of the first wing section **22** is pivotally connected to a first transverse side of the center section **20** so that the first wing section **22** can pivot vertically about a first wing section pivot axis **B-B**, which is parallel to the horizontal longitudinal axis of the frame **12** when the tillage implement **10** is in the deployed configuration. A proximal transverse end of the second wing section **24** is pivotally connected to a second transverse side of the center section **20** opposite the first transverse side so that the second wing section **24** can pivot vertically about a second wing section pivot axis **C-C,** which is parallel to the horizontal longitudinal axis of the frame **12** when the tillage implement **10** is in the deployed configuration. The center section **20** and the wing sections **22, 24** are able to pivot about their respective pivot axes **A-A, B-B** and **C-C** to configure the tillage implement **10** between the deployed configuration (Fig. 1) and a storage and transport configuration (Fig. 2A and Fig. 2B).

The first and second wing sections **22, 24** comprise first and second wheels **21, 23,** respectively, rotatably mounted thereon which support the first and second wing sections **22, 24** on the ground when the tillage implement **10** is in the deployed configuration (Fig. 1). The first and second wheels **21, 23** are located proximate distal transverse ends of the first and second wing sections **22, 24,** respectively. Further, the first and second wheels **21, 23** are situated longitudinally forward of the first and second wing sections **22, 24,** respectively. Situating the wheels **21, 23** longitudinally forward of the wing sections **22, 24** permits shortening longitudinal separation between adjacent first transverse frame elements **13a** and **13b** of the first wing section **22,** and between adjacent second transverse frame elements **13c** and **13d** of the second wing section **24,** as well as between adjacent transverse frame elements of the center section **20,** which shortens the length of the frame **12** and allows space between the adjacent transverse frame elements **13** to provide linkage mechanisms (not shown in Fig. 1) therebetween. The linkage mechanisms are used to control gangs **32** of annular harrow tools **50** (only one labeled) mounted on first transverse frame elements **13a** and **13b,** gangs **34** of annular harrow tools **50** (only one labeled) mounted on the second transverse frame elements **13c** and **13d,** and gangs of annular harrow tools **50** (only one labeled) mounted on the transverse frame elements of the center section **20.**

One or more other tillage tools, for example any one or more of rotary harrows **41,** tine harrows **42** and packers **43,** may be connected (connections not shown) at a rear of the wing sections **22, 24** and/or the center section **20.** The frame sections **20, 22, 24** are usually equipped with tillage tools in the same way to provide equivalent tillage possibilities across the width of the frame **12.** The arrangement shown in Fig. 1 is provided to illustrate that various kinds of tillage tools may be mounted on the frame.

As seen in Fig. 2A and Fig. 2B, when the center section **20** and the wings sections **22, 24** are folded up into the storage and transport configuration, the tillage implement **10** acquires a compact height profile **h₁** and a compact width profile **w₁**.

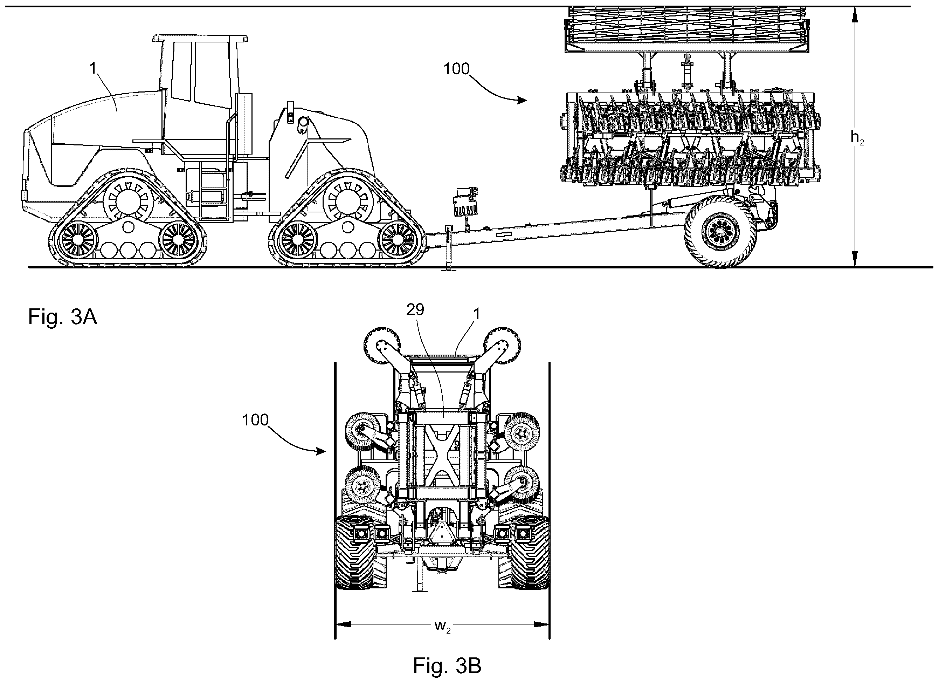

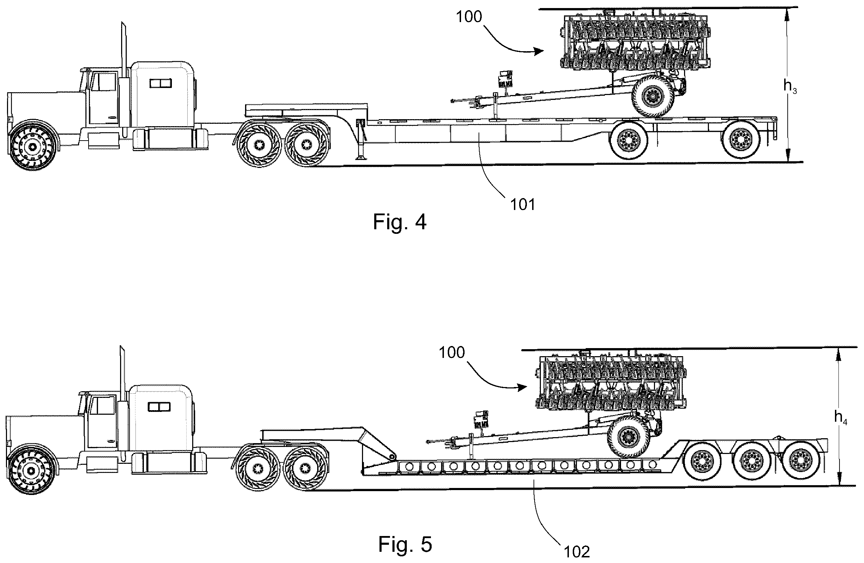

In another embodiment of the present invention, a two-section tillage implement **100** is illustrated in Fig. 3A, Fig. 3B, Fig. 4 and Fig. 5, in which the wing support is not a complete center section with its own tillage tools. Rather, the wing support comprises a narrower sub-frame **29** to which the wing sections are pivotally connected. Otherwise, the two-section tillage implement **100** is substantially the same as the three-section tillage implement **10.** The two-section tillage implement **100** has a similar height profile **h₂** to the three-section tillage implement **10,** but has an even more compact width profile **w₂** than the three-section tillage implement **10.** The more compact width profile **w₂** better suits the two-section tillage implement **100** for transportation on a transport trailer, for example a drop-deck flat-bed transport trailer **101** (Fig. 4) or a double-drop flat-bed transport trailer **102** (Fig. 5). Overall height profile including the transport trailer is somewhat lower for a double-drop flat-bed transport trailer **102** (**h₄** in Fig. 5) as compared to a drop-deck flat-bed transport trailer **101** (**h₃** in Fig. 4).

For road traffic, transportation dimensions, such as height and width, must accommodate both transport regulations and physical limits (e.g. hydro wires, bridges and the like), which have limited the ability to transport fully assembled prior art tillage implements by road. The present tillage implement provides more compact transportation dimensions, increasing the ability to transport the fully assembled tillage implement long distances on roads through multiple regulatory jurisdictions, thereby eliminating the need for the recipient of the tillage implement to assemble the implement on arrival.

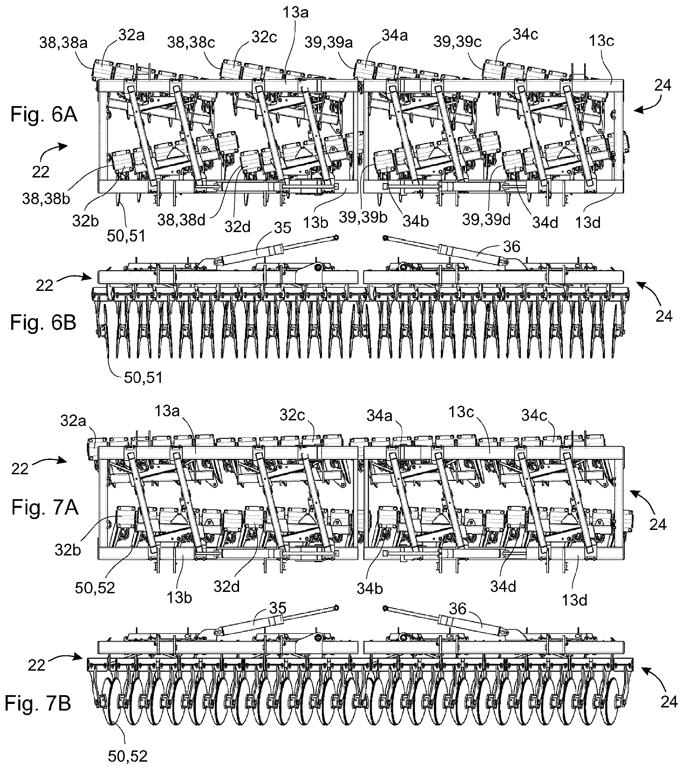

Fig. 6A to Fig. 9B show the first and second wing sections **22, 24** transversely adjacent to each other out of context of the remainder of the tillage implement, and without the linkage mechanism. The first wing section **22** comprises the longitudinally adjacent and spaced-apart first transverse frame elements **13a** and **13b,** and the second wing section **24** comprises the longitudinally adjacent and spaced-apart second transverse frame elements **13c** and **13d.** The first transverse frame element **13a** is a first forward transverse frame element and is longitudinally forward of the other first transverse frame element **13b,** which is a first rearward transverse frame element. The second transverse frame element **13c** is a second forward transverse frame element and is longitudinally forward of the other second transverse frame element **13d,** which is a second rearward transverse frame element. Each of the first transverse frame elements **13a, 13b** have the gangs **32** of annular harrow tools **50** mounted thereon. Each of the second transverse frame elements **13c, 13d** have the gangs **34** of annular harrow tools **50** mounted thereon.

The gangs **32** of annular harrow tools **50** comprise a first gang **32a,** a second gang **32b,** a third gang **32c** and a fourth gang **32d,** where the first and third gangs **32a, 32c** are mounted on the first forward transverse frame element **13a,** and the second and fourth gangs **32b, 32d** are mounted on the first rearward transverse frame element **13b** longitudinally in line with the first and third gangs **32a, 32c,** respectively. The gangs **34** of annular harrow tools **50** comprise a fifth gang **34a,** a sixth gang **34b,** a seventh gang **34c** and an eighth gang **34d,** where the fifth and seventh gangs **34a, 34c** are mounted on the second forward transverse frame element **13c,** and the sixth and eighth gangs **34b, 34d** are mounted on the second rearward transverse frame element **13d** longitudinally in line with the fifth and seventh gangs **34a, 34c,** respectively. The first and second wing sections **22, 24** are essentially identical.

Each of the gangs **32** comprise a toolbar **38** on which the annular harrow tools **50** are mounted on rubber torsion suspensions. The first gang **32a** comprises a first toolbar **38a.** The second gang **32b** comprises a second toolbar **38b.** The third gang **32c** comprises a third toolbar **38c.** The fourth gang **32d** comprises a fourth toolbar **38d.** Each of the gangs **34** comprise a toolbar **39** on which the annular harrow tools **50** are mounted on rubber torsion suspensions. The fifth gang **34a** comprises a fifth toolbar **39a.** The sixth gang **34b** comprises a sixth toolbar **39b.** The seventh gang **34c** comprises a seventh toolbar **39c.** The eighth gang **34d** comprises an eighth toolbar **39d.** The toolbars **38, 39** are each pivotally mounted on the respective wing sections **22, 24** to be rotatable about vertical rotation axes. Each of the annular harrow tools **50** has a rotating circumferential cutting edge whereby a vertical harrow tool plane through two diametrically opposed points on the circumferential cutting edge is non-perpendicular to a vertical toolbar plane through a length of the toolbar **38** or **39** on which the annular harrow tool **50** is mounted. The vertical harrow tool planes do not rotate with respect to the vertical toolbar plane, except when the suspensions permit resilient deflection when the harrow tools **50** hit obstacles. While the vertical harrow tool plane is shown non-perpendicular the vertical toolbar plane, the vertical harrow tool plane preferably forms an angle of from 0° to 16°, more preferably 8° to 16°, with a line normal of the vertical toolbar plane.

A first actuator **35** connected to the first wing section **22** and to another portion of the frame **12** (e.g. the center section **20**) can be actuated to pivot the first wing section **22** about the first wing section pivot axis **B-B**. A second actuator **36** connected to the second wing section **24** and to another portion of the frame **12** (e.g. the center section **20**) can be actuated to pivot the second wing section **24** about the second wing section pivot axis **C-C.** The actuators **35, 36** may be any suitable actuators, for example hydraulic cylinders, linear actuators and the like.

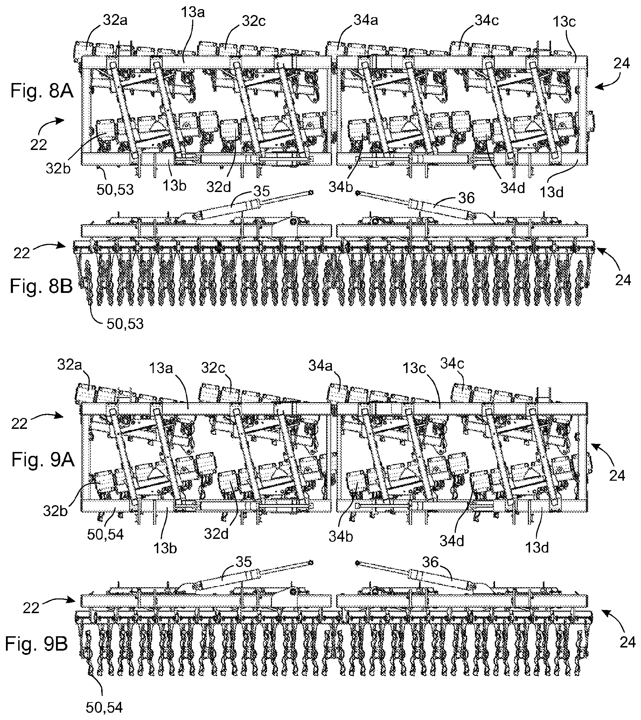

Fig. 6A to Fig. 9B show that the gangs **32, 34** may comprise any one of a variety of different kinds of the annular harrow tools **50,** for example flat coulter blades **51** (only one labeled in Fig. 6A and Fig. 6B), concave disc harrows **52** (only one labeled in Fig. 7A and Fig. 7B), 13-wave coulter blades **53** (only one labeled in Fig. 8A and Fig. 8B) and 8-wave coulter blades **54** (only one labeled in Fig. 9A and Fig. 9B). While the gangs **32, 34** in each of the Figures are shown with the same annular harrow tool, one or more of the gangs could comprise different annular harrow tools than the other gangs.

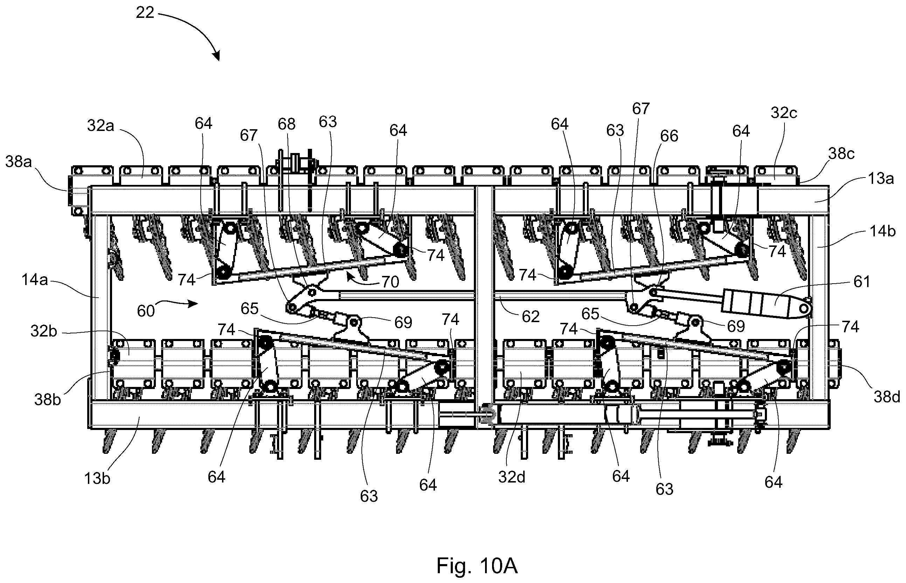

Fig. 10A shows the first wing section **22** out of context of the remainder of the tillage implement, the first wing section **22** comprising a double link linkage mechanism **60** pivotally linked to each of the four gangs **32a, 32b, 32c, 32d** through respective gang assemblies **70,** the double link linkage mechanism **60** disposed longitudinally between the first toolbar **38a** and the second toolbar **38b,** and longitudinally between third toolbar **38c** and the fourth toolbar **38d.** The description of Fig. 10A applies similarly to the second wing section **24.**

The double link linkage mechanism **60** is operated by an actuator **61** mounted on a longitudinal frame member **14b** of the first wing section **22.** The actuator **61** is pivotally connected to the double link linkage mechanism **60.** Operation of the actuator **61** operates the double link linkage mechanism **60** and the actuator **61** is controlled from the towing vehicle towing the implement. The actuator **61** may comprise any suitable actuator, for example a hydraulic cylinder or a linear actuator.

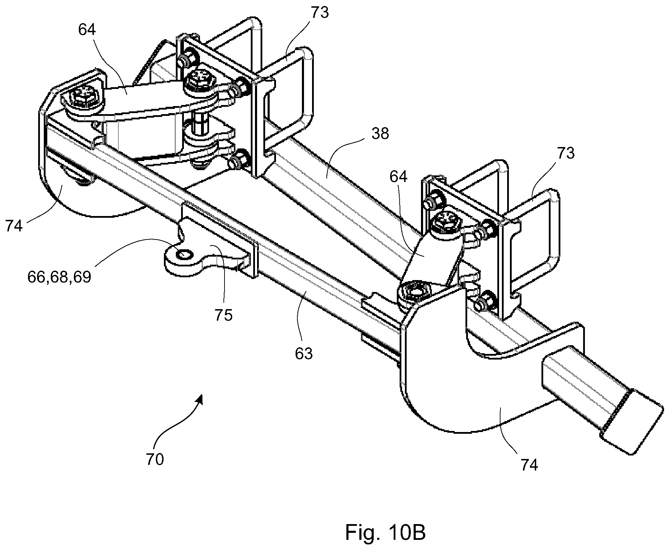

Fig. 10B illustrates details of the gang assemblies **70.** Each gang assembly **70** comprises a rigid quadrilateral formed by the toolbar **38,** an opposed support bar **63** and a pair of support brackets **74** rigidly connecting the toolbar **38** to the support bar **63.** The support bar **63** comprises a flange **75** to which the double link linkage mechanism **60** is pivotally linked. The gang assembly **70** is mounted on one of the transverse frame elements **13** through a pair of gang assembly mounts **73.** The gang assembly **70** is pivotally connected to the gang assembly mounts **73** by respective gang assembly linkage arms **64,** whereby the gang assembly linkage arms **64** are portions of the double link linkage mechanism **60** and are pivotally connected to both the gang assembly mounts **73** and the support bar **63.**

Still referring to Fig. 10A and Fig. 10B, the double link linkage mechanism **60** comprises a plurality of pivotally connected linkage arms. The plurality of linkage arms comprises the gang assembly linkage arms **64** and a transversely extending control rod **62,** the control rod **62** pivotally connected to the actuator **61.** The control rod **62** is also pivotally connected to the four gang assemblies **70** (only one labeled in Fig. 10A), each gang assembly **70** mounting one of the four toolbars **38a, 38b, 38c, 38d** to one or the other of the two transverse frame elements **13a, 13b.** In the illustrated embodiment, the control rod **62** is directly pivotally connected to the gang assemblies **70** for the front transverse frame elements **13a** and **13c** at a pivot points **68** and **66,** respectively, on the flanges **75** of respective support bars **63.** The control rod **62** is indirectly pivotally connected to the gang assemblies **70** for the rear transverse frame elements **13b** and **13d** through connecting arms **65** at a pivot points **67** between the control rod **62** and the connecting arms **65,** and each of the connecting arms **65** is directly pivotally mounted at a pivot point **69** on the support bar **63** associated with the second or fourth toolbar **38b, 38d,** respectively. The control rod **62** is directly pivotally mounted on the support bars **63** associated with the first and third toolbars **38a, 38c,** respectively. Connection to each support bar **63** is at a location about half way along a length of the support bar **63.** Each of the connecting arms **65** could instead be directly pivotally mounted on one the support bars **63** associated with the first and third toolbars **38a, 38c,** respectively, and the control rod **62** directly pivotally mounted on the support bar **63** associated with the second and fourth toolbars **38b, 38d,** respectively. The actuator **61** is directly pivotally mounted on both the control rod **62** and one of the support bars **63** to which the control rod **62** is also directly pivotally mounted, the actuator **61** and the control rod **62** sharing a common pivot point **66** on the support bar **63** on which both the actuator **61** and the control rod **62** are directly mounted. Further, the pivot points **67** between the control rod **62** and the two connecting arms **65** are at different locations on the control rod **62** than pivot points **66, 68** between the control rod **62** and the two support bars **63** on which the control rod **62** is directly pivotally mounted. Overall, the double link linkage mechanism **60** comprises the control rod **62,** the connecting arms **65** and the gang assembly linkage arms **64.** In this way, a single common control rod **62** simultaneously controls rotation of all four toolbars **38a, 38b, 38c** and **38d.** Further, actuation of the actuator **61** causes the first and third toolbars **38a, 38c,** respectively, to rotate in opposite rotational directions about the respective vertical rotation axes than the second and fourth toolbars **38b, 38c.**

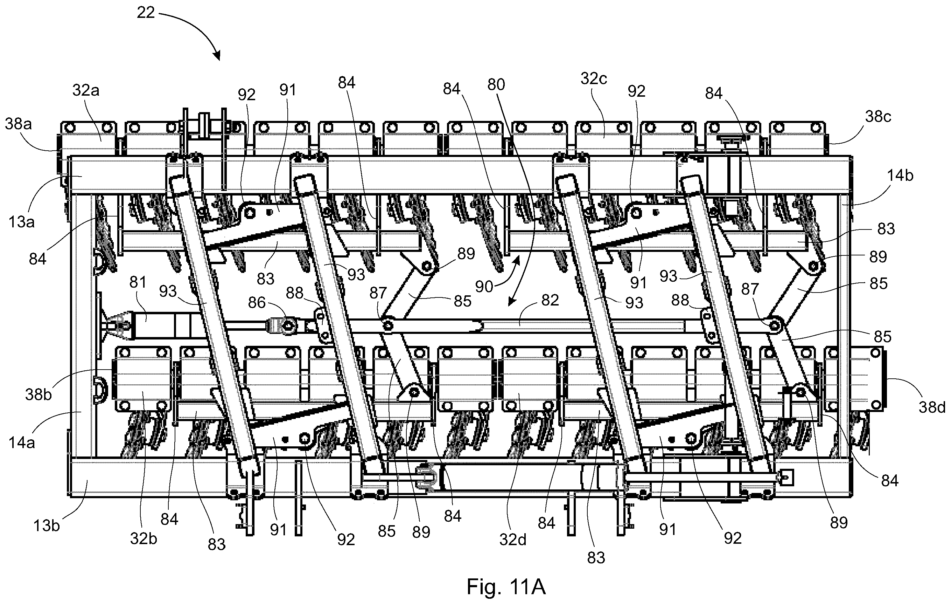

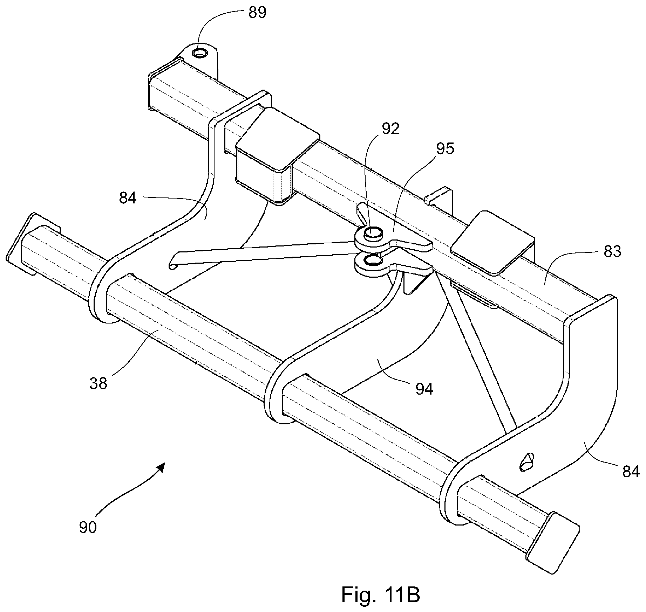

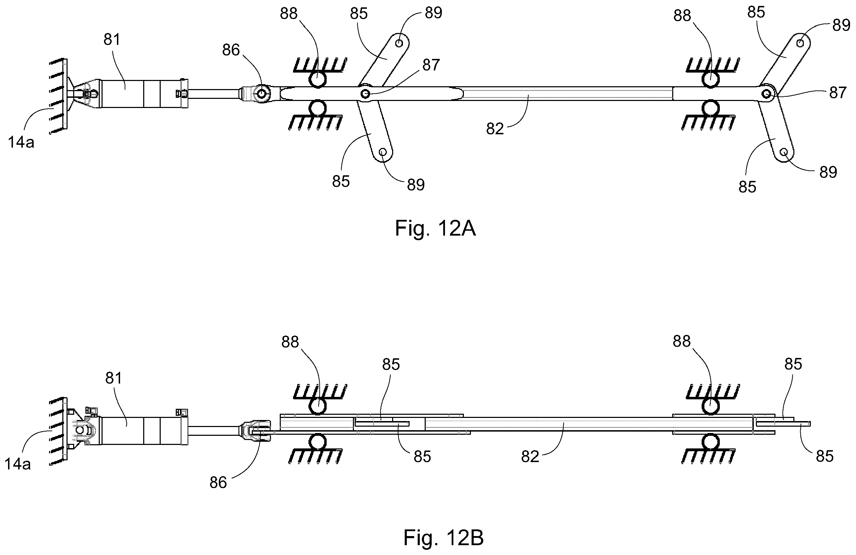

Fig. 11A shows the first wing section **22** out of context of the remainder of the tillage implement, the first wing section **22** comprising a center pivot linkage mechanism **80** pivotally linked to each of the four gangs **32a, 32b, 32c, 32d** through four respective gang assemblies **90** (only one labeled in Fig. 11A), the double link linkage mechanism **80** disposed longitudinally between the first toolbar **38a** and the second toolbar **38b,** and longitudinally between the third toolbar **38c** and the fourth toolbar **38d.** Fig. 11B illustrates details of the gang assemblies **90.** Fig. 12A and Fig. 12B show detail of the center pivot linkage mechanism **80.** The descriptions of Fig. 11A, Fig. 11B, Fig. 12A and Fig. 12B apply similarly to the second wing section **24.** The center pivot linkage mechanism **80** is operated by an actuator **81** mounted on a longitudinal frame member **14a** of the first wing section **22.** The actuator **81** is pivotally connected to the center pivot linkage mechanism **80.** Operation of the actuator **81** operates the center linkage mechanism **80** and the actuator **81** is controlled from the towing vehicle towing the implement. The actuator **81** may comprise any suitable actuator, for example a hydraulic cylinder or a linear actuator.

Each gang assembly **90** comprises a rigid quadrilateral formed by the toolbar **38,** an opposed support bar **83** and a pair of outer support brackets **84** rigidly connecting the toolbar **38** to the support bar **83.** An inner support bracket **94** also rigidly connects the toolbar **38** to the support bar **83** for added strength. The support bar **63** comprises a mounting flange **95** through which the gang assembly **90** is rotatably mounted to frame.

Still referring to Fig. 11A, Fig. 11B, Fig. 12A and Fig. 12B, the center pivot linkage mechanism **80** comprises a plurality of pivotally connected linkage arms. The plurality of linkage arms comprises a transversely extending control rod **82** and four connecting arms **85.** The control rod **82** is pivotally connected to all four of the support bars **83** through the connecting arms **85.** Each of the connecting arms **85** is pivotally mounted on the respective support bar **83** at pivot points **89** and pivotally mounted directly on the control rod **82** at pivot points **87.** Connection of the connecting arms **85** to the support bars **83** is at a location proximate one end of each of the support bars **83.** The actuator **81** is directly pivotally mounted on one end of control rod **82** at pivot point **86.** Further, the pivot points **87** between the control rod **82** and the two connecting arms **85** connecting longitudinally aligned toolbars, i.e. toolbars **38a** and **38b** or toolbars **38c** and **38d,** are at a common location on the control rod **82.** Each of the gang assemblies **70** are also rotatably mounted on top plates **91** through the mounting flanges **95** at pivot points **92,** the pivot points **92** defining the vertical axes of rotation of the toolbars **38a, 38b, 38c** and **38d.** The top plates **91** are secured to longitudinal braces **93** attached to the transverse frame elements **13a** and **13b.** In this way, a single common control rod **82** simultaneously controls rotation of all four toolbars **38a, 38b, 38c** and **38d.** Further, actuation of the actuator **81** causes the first and third toolbars **38a, 38c,** respectively, to rotate in opposite rotational directions about the respective vertical rotation axes than the second and fourth toolbars **38b, 38c.** Furthermore, to ensure proper motion of the control rod **82,** the control rod **82** is supported on both sides by roller or slider assemblies **88** (see Fig. 12A and Fig. 12B) mounted on the longitudinal braces **93.**

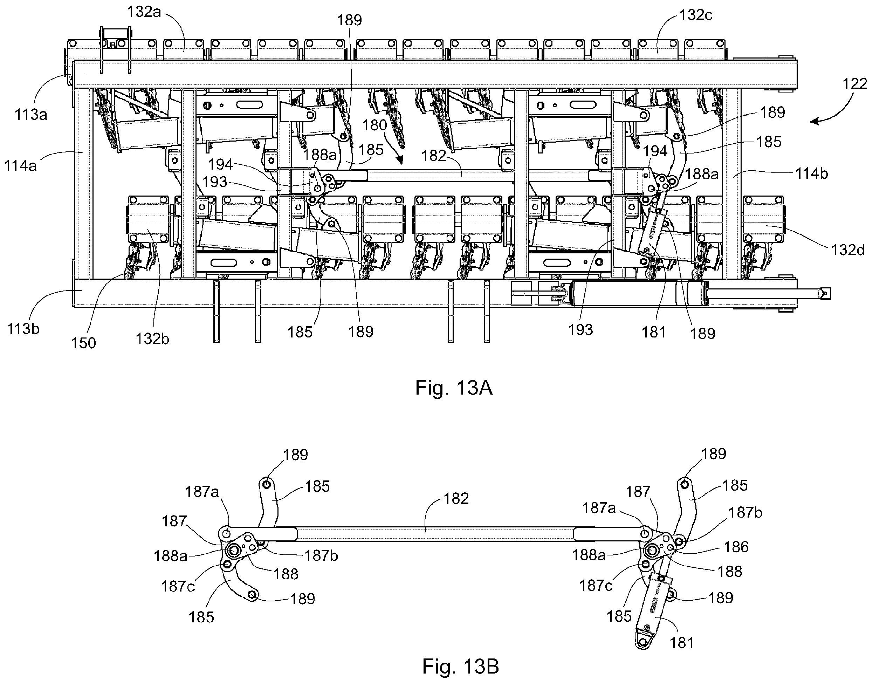

Fig. 13A shows a first wing section **122** similar in construction and operation to the first wing section of Fig. 11A. The first wing section **122** comprises a bell crank-style center pivot linkage mechanism **180.** Fig. 13B shows a bell crank control linkage of the bell crank-style center pivot linkage mechanism **180.**

Similar to Fig. 11A, the first wing section **122** shown in Fig. 13A comprises first longitudinally spaced-apart transverse frame elements **113a** and **113b** connected by first transversely spaced-apart longitudinal frame elements **114a** and **114b** and by transversely spaced-apart longitudinal braces **193.** Four gangs **132a, 132b, 132c, 132d** of annular harrow tools **150** (only one labeled) are mounted on the transverse frame elements **113a** and **113b.** In a manner similar to Fig. 11A, the center pivot linkage mechanism **180** is pivotally linked to each of the four gangs **132a, 132b, 132c, 132d** through four respective gang assemblies, the center pivot linkage mechanism **180** disposed longitudinally between longitudinally spaced-apart toolbars of the gangs **132a, 132b, 132c, 132d.** The gang assemblies are of similar construction to the gang assembly shown in Fig. 11B. The primary difference between the first wing section **122** of Fig. 13A and the first wing section **22** of Fig. 11A is the construction of the control linkage.

As best seen in Fig. 13B, the bell crank-style center pivot linkage mechanism **180** comprises a plurality of pivotally connected linkage arms. The plurality of linkage arms comprises a transversely extending control rod **182** and four arcuate connecting arms **185.** The control rod **182** is pivotally connected to all four support bars of the gang assemblies through the connecting arms **185.** Each of the connecting arms **185** is pivotally mounted on the respective support bar at pivot points **189** and pivotally mounted to the control rod **182** through generally triangular pivot plates **187** at pivot points **187b, 187c.** The control rod **182** is pivotally connected to the pivot plates **187** at pivot points **187a.** The pivot points **187a, 187b, 187c** on a given pivot plate **187** are spaced-apart from each other, preferably situated at the apexes of the triangular pivot plate **187.** Similar to the arrangement shown in Fig. 11A, connection of the connecting arms **185** to the support bars of the gang assemblies is at a location proximate one end of each of the support bars.

An actuator **181** is used to cause the control rod **182** to translate transversely. However, the positioning an orientation of the actuator **181** is different than in Fig. 11A because the arcuate connecting arms **185** and the triangular pivot plates **187** to which the arcuate connecting arms **185** and the control rod **182** are pivotally linked to provide for bell crank motion. A bell crank is a type of crank that changes motion through an angle. Thus, the actuator **181** can be positioned and oriented to better relate to an angle on the annular harrow tools **150,** while still providing for transverse translation of the control rod **182.** The actuator **181** is thus mounted on one of the longitudinal braces **193** at a location proximate one of the transverse frame elements, for example the transverse frame element **113b,** and pivotally mounted on one of the triangular pivot plates **187** at pivot point **186.** Alternatively, the actuator **181** can be mounted directly to the transverse frame element or another part of the frame. The actuator **181** is thereby oriented in a direction that is closer to parallel with the orientation of the plane of the annular harrow tools **150,** which provides better control of the position of the gangs **132a, 132b, 132c, 132d.** The actuator **181** thus transfers its motion through a non-zero angle into the control rod **182,** the control rod **182** transferring motion to the gangs **132a, 132b, 132c, 132d** to adjust the angle of the gangs **132a, 132b, 132c, 132d.** The bell crank control linkage can be connected through a connector linkage to one or more other bell crank control linkages to permit a single actuator to control additional gangs of annular harrow tools.

To provide further support for the center pivot linkage mechanism **180,** the triangular pivot plates **187** are pivotally mounted to the longitudinal braces **193** through support plates **188** pivotally mounted at pivot point **188a** to the pivot plates **187** and to the support flanges **194** attached to the braces **193.** Because the pivot point **186** and the pivot points **187a** are offset from the pivot points **188a,** actuation of the actuator **181** cause the pivot plates **187** to rotate arcuately about the pivot points **188a** thereby causing the control rod **182** to translate linearly in the transverse direction to transmit motion through all of the arcuate links **185** to the gang assemblies. In this way, a single common bell crank control rod **182** simultaneously controls rotation of all four gangs in the same manner as described for the arrangement in Fig. 11A.

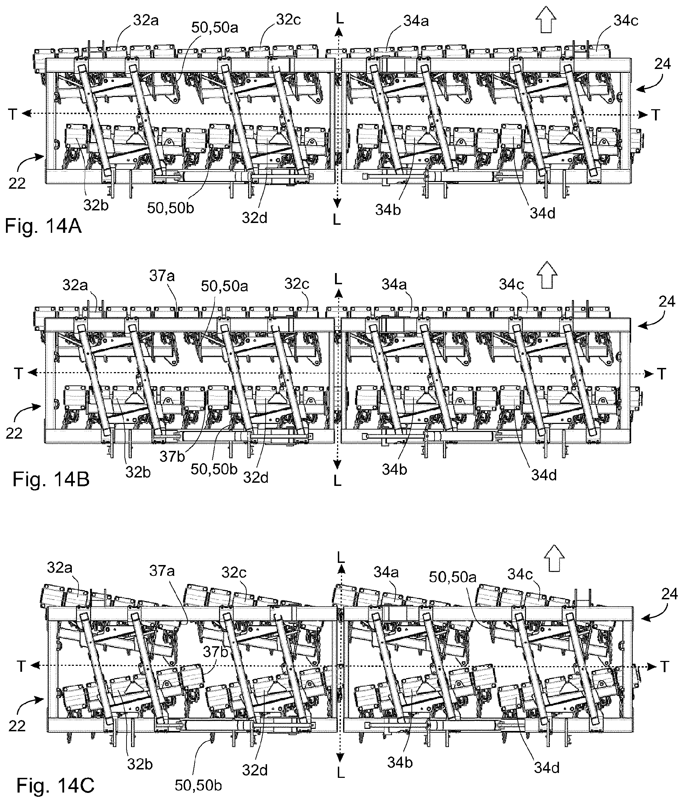

Fig. 14A, Fig. 14B and Fig. 14C show the first and second wing sections **22, 24** transversely adjacent to each other out of context of the remainder of the tillage implement, and without the linkage mechanisms shown, though the wing sections **22, 24** illustrated would each comprise the center pivot linkage mechanism 80. Forward direction is indicated by a large arrow in each of Fig. 14A, Fig. 14B and Fig. 14C. Fig. 14A, Fig. 14B and Fig. 14C illustrate the orientations and the range of motion of the gangs **32a, 32b, 32c, 32d, 34a, 34b, 34c, 34d** of the two wing sections **22, 24** as the toolbars are rotated simultaneously in opposite rotational directions about their respective vertical axes of rotation by operation of the linkage mechanisms. The orientations and range of motion of the gangs **32a, 32b, 32c, 32d, 34a, 34b, 34c, 34d** would be similar when the wing sections **22, 24** comprise the double link linkage mechanism **60.**

As shown in Fig. 14A, at one extreme of rotation, long axes of the toolbars of the front gangs **32a, 32c, 34a, 34c** are angled at -2° with respect to a horizontal transverse axis **T-T** of the implement, and annular harrow tools **50a** (only one labeled) of the front gangs **32a, 32c, 34a, 34c** are angled at -14° with respect to a longitudinal axis **L-L** of the implement. Further, long axes of the toolbars of the rear gangs **32b, 32d, 34b, 34d** are angled at 2° with respect to a horizontal transverse axis **T-T** of the implement, and the annular harrow tools **50b** (only one labeled) of the rear gangs **32b, 32d, 34b, 34d** are angled at 14° with respect to a horizontal longitudinal axis **L-L** of the implement. In such an orientation, the gangs **32a, 32b, 32c, 32d, 34a, 34b, 34c, 34d** are almost parallel to the transverse axis **T-T** and the annular harrow tools **50** are in aggressive tillage positions.

When the gangs **32a, 32b, 32c, 32d, 34a, 34b, 34c, 34d** are rotated so that the front and rear gangs **32a, 32b, 32c, 32d, 34a, 34b, 34c, 34d** are all angled at 0° (i.e. parallel) with respect to the transverse axis **T-T** as seen in Fig. 14B, the annular harrow tools **50a** of the front gangs **32a, 32c, 34a, 34c** are angled at -12° with respect to the longitudinal axis **L-L,** and the annular harrow tools **50b** of rear gangs **32b, 32d, 34b, 34d** are angled at 12° with respect to the longitudinal axis **L-L.** The annular harrow tools **50** are still in aggressive tillage positions, though not quite as aggressive as in Fig. 14A, but the front gangs **32a, 32c, 34a, 34c** are now longitudinally separated from the rear gangs **2b, 32d, 34b, 34d** by a maximum distance at the closest separation of the gangs **32a, 32b, 32c, 32d, 34a, 34b, 34c, 34d** to permit maximum soil flow through the implement.

When the gangs **32a, 32b, 32c, 32d, 34a, 34b, 34c, 34d** are rotated so that the front gangs **32a, 32c, 34a, 34c** are angled at 10° and the rear gangs **32b, 32d, 34b, 34d** are angled at -10° with respect to the transverse axis **T-T** as seen in Fig. 14C, the annular harrow tools **50a** of the front gangs **32a, 32c, 34a, 34c** are angled at -2° with respect to the longitudinal axis **L-L** and the annular harrow tools **50b** are angled at 2° with respect to the longitudinal axis **L-L.** The annular harrow tools **50** are now in a non-aggressive tillage position. Comparing Fig. 14C to Fig. 14, it can be seen that when the annular harrow tools **50** are in a non-aggressive tillage position (Fig. 14C), an end **37a** (only one labeled) of each of the front gangs **32a, 32c, 34a, 34c** is longitudinally much closer to a corresponding end **37b** of the corresponding longitudinally aligned rear gangs **32b, 32d, 34b, 34d.** If the annular harrow tools **50** were in an aggressive tillage position with the gangs **32a, 32b, 32c, 32d, 34a, 34b, 34c, 34d** so oriented, the implement would be subject to plugging by soil at the ends **37a, 37b** because the front gangs **32a, 32c, 34a, 34c** would be insufficiently longitudinally separated from the rear gangs **32b, 32d, 34b, 34d** at the ends **37a, 37b** of the front and rear gangs, respectively.

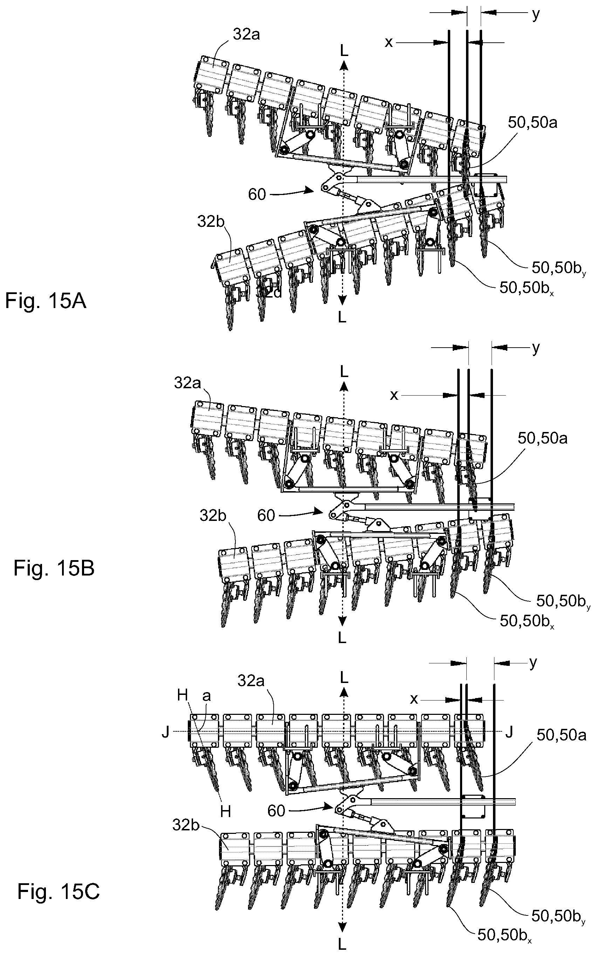

Fig. 15A, Fig. 15B and Fig. 15C illustrate how simultaneously rotating the front and rear gangs **32a, 32b,** respectively, in opposite rotational directions about their respective vertical rotation axes using the double link linkage mechanism **60** causes shifting of the relative transverse positions of the points at which rotating circumferential cutting edges of the annular harrow tools **50a** (only one labeled) of the front gang **32a** contact the field and the points at which the rotating circumferential cutting edges of the annular harrow tools **50b** (only two labeled) of the rear gang **32b** contact the field. As seen in Fig. 15C, two diametrically opposed points on the circumferential cutting edge of the annular harrow tool **50** define a vertical harrow tool plane **H-H** (only one labeled) through the annular harrow tool **50.** Because the harrow tools **50** mounted on the toolbars of the gangs are not rotatable on the toolbars, except when the suspension permits resilient deflection when the harrow tool **50** hits an obstacle, an angle **a** (only one labeled) between the vertical harrow tool plane **H-H** and a vertical toolbar plane **J-J** (only one labeled) through a length of the toolbar remains constant as the gangs rotate about their respective vertical rotation axes.

In Fig. 15A, all of the annular harrow tools **50** are in a least aggressive tillage position where the vertical harrow tool planes **H-H** through two diametrically opposed points on the circumferential cutting edges of the annular harrow tools **50** are parallel to the longitudinal axis **L-L** of the implement. A given annular harrow tool **50a** of the front gang **32a** is transversely offset from a first transversely adjacent annular harrow tool **50bₓ** of the rear gang **32b** by a first transverse offset distance of **x.** The given annular harrow tool **50a** of the front gang **32a** is also transversely offset from a second transversely adjacent annular harrow tool **50b_{y}** of the rear gang **32b** by a second transverse offset distance of **y** in the opposite transverse direction as **x**. The annular harrow tools **50bₓ** and **50b_{y}** are the annular harrow tools on the rear gang **32b,** which are the nearest transverse neighbors to the given annular harrow tool **50a** on the front gang **32a.** When the front and rear gangs **32a, 32b,** respectively, are rotated so that the annular harrow tools **50** are in the least aggressive tillage position as seen in Fig. 15A, the first transverse offset distance **x** is the same as or nearly the same as the second transverse offset distance **y,** which means that the annular harrow tools **50** are creating longitudinal cutting paths that are equidistantly, or nearly equidistantly, transversely spaced. As the front and rear gangs **32a, 32b,** respectively, are rotated so that the annular harrow tools **50** are in progressively more aggressive tillage positions (see Fig. 15B and then Fig. 15C), the difference between the first transverse offset distance **x** and the second transverse offset distance **y** changes, indicating that the points at which the rotating circumferential cutting edges of the annular harrow tools of the front and rear gangs contact the field are shifting transversely relative to each other. This shifting permits the annular harrow tools **50a** of the front gang **32a** to throw soil back to the annular harrow tools **50b** of the rear gang **32b** for more efficient and effective tilling. Further, as previously mentioned, rotating the front and rear gangs **32a, 32b,** respectively, so that the annular harrow tools **50** are in more aggressive tillage positions increases the longitudinal separation of the gangs **32a, 32b** at the closest separation of the gangs **32a, 32b,** which provides maximum soil flow and helps prevent plugging of the implement.

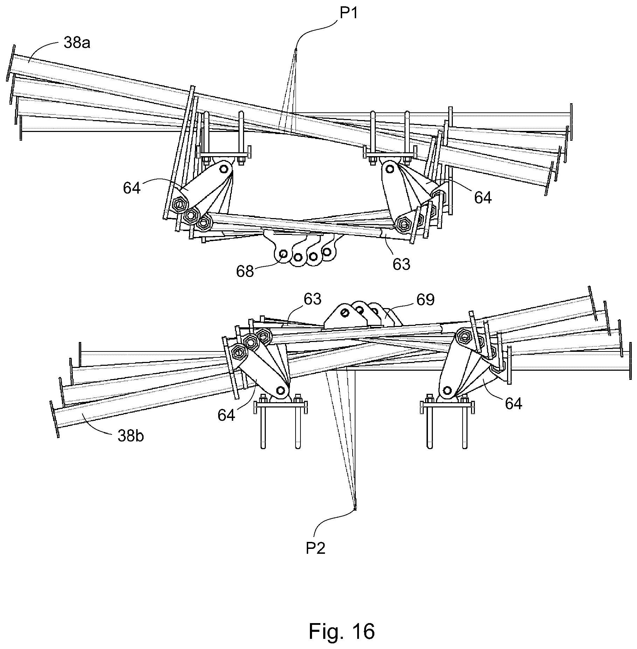

When the double link linkage mechanism **60** is used to rotate the toolbars, the toolbars rotate about virtual rotation axes. Virtual rotation axes are axes in space that do not pass through any real pivot points of the linkages themselves. Fig. 16 depicts the location in space of virtual vertical rotation axes **P1** and **P2** of the toolbars **38a** and **38b,** respectively, as the toolbars **38a** and **38b** are rotated in opposite rotation directions by the double link linkage mechanism **60.** Fig. 16 is a top view with the forward direction being toward the top of the Figure. Fig. 16 shows that the virtual rotation axis **P1** of the front toolbar **38a** is forward of the front toolbar **38a,** and that the pivot point **68** where the side linkage arm **63** is connected to the control rod (not shown in Fig. 16) translates transversely as the front toolbar **38a** is rotated about the rotation axis **P1.** Similarly, the virtual rotation axes **P2** of the rear toolbar **38b** is rearward of the rear toolbar **38b,** and the pivot point **69** where the side linkage arm **63** is connected to the control rod (not shown in Fig. 16) translates transversely as the rear toolbar **38b** is rotated about the rotation axis **P2.**

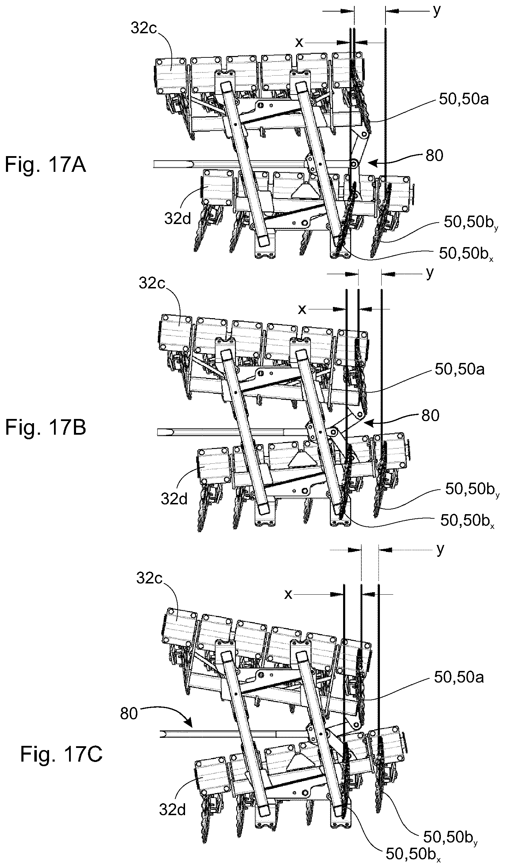

Fig. 17, Fig. 17B and Fig. 17C illustrate how simultaneously rotating the front and rear gangs **32c, 32d,** respectively, in opposite rotational directions about their respective vertical rotation axes using the center pivot linkage mechanism **80** causes shifting of the relative transverse positions of the points at which rotating circumferential cutting edges of the annular harrow tools **50a** (only one labeled) of the front gang **32a** contact the field and the points at which the rotating circumferential cutting edges of the annular harrow tools **50b** (only two labeled) of the rear gang **32b** contact the field. Fig. 17A shows the annular harrow tools **50** in a less aggressive tillage position, with the aggressiveness of the tillage position of the annular harrow tools **50** increasing through Fig. 17B to Fig. 17C. The same analysis as for Fig. 15A, Fig. 15B and Fig. 15C applies to Fig. 17, Fig. 17B and Fig. 17C showing that the two different linkage mechanisms **60, 80** can be utilized to achieve similar results.

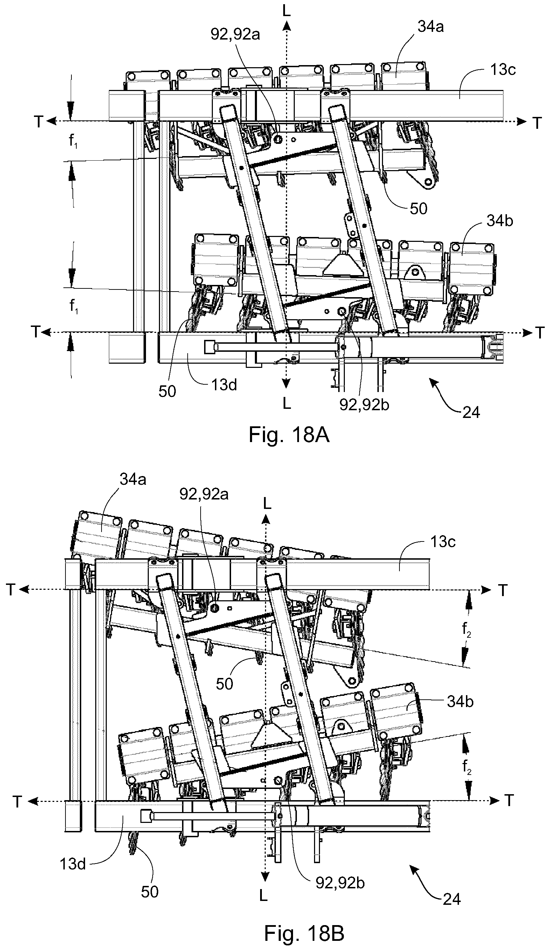

Fig. 18A and Fig. 18B illustrate front and rear gangs **34a, 34b,** respectively on the second wing section **24,** where rotation of the gangs **34a, 34b** is controlled by a center pivot linkage mechanism (not shown). Through operation of the center pivot linkage mechanism, the gangs **34a, 34b** rotate in opposite rotational directions about vertical rotation axes through real pivot points **92,** with the front gang **34a** rotating about front pivot point **92a** and the rear gang **34b** rotating about rear pivot point **92b.** When the gangs **34a, 34b** are parallel or close to parallel (angle **f₁**) with the transverse axis **T-T** of the tillage implement (Fig. 18A), the annular harrow tools **50** (only one labeled on each gang) are in an aggressive tillage position angled away from the longitudinal axis **L-L** of the tillage implement, while when the annular harrow tools **50** are in a least aggressive tillage position parallel to the longitudinal axis **L-L** (Fig. 18B), the gangs **34a, 34b** are angled away (angle **f₂**) from the transverse axis **T-T.**

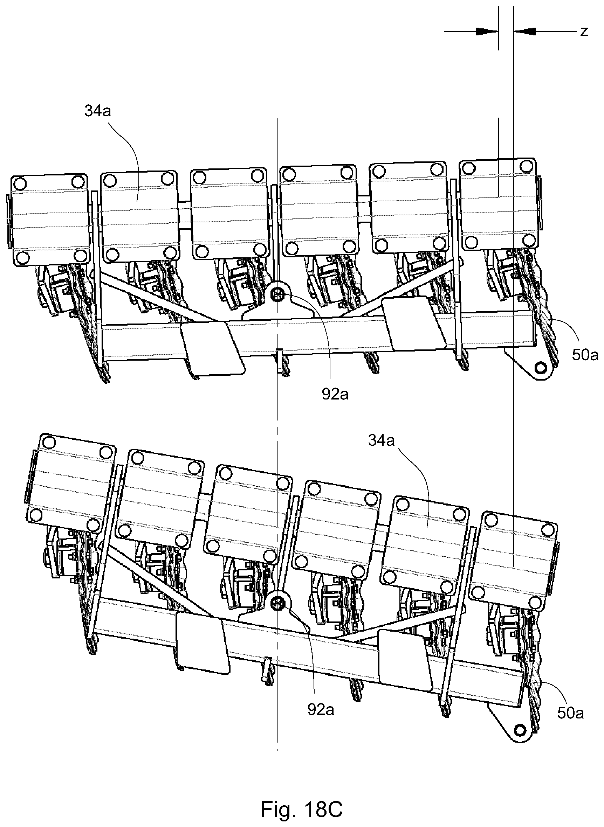

Fig. 18C shows the front gang **34a** from Fig. 18A and Fig. 18B with the annular harrow tools **50a** (only one labeled) shown in an aggressive tillage position (upper) and a non-aggressive tillage position (lower) illustrating how relative transverse positions of points at which the cutting edges of the annular harrow tools **50a** first contact the field shift transversely by an amount **z** when the gang **34a** is rotated 12° between the aggressive tillage position (upper) and the non-aggressive tillage position (lower). The real pivot point **92a** through which the vertical rotation axis passed does not shift transversely when the gang **34a** is rotated about the vertical rotation axis.

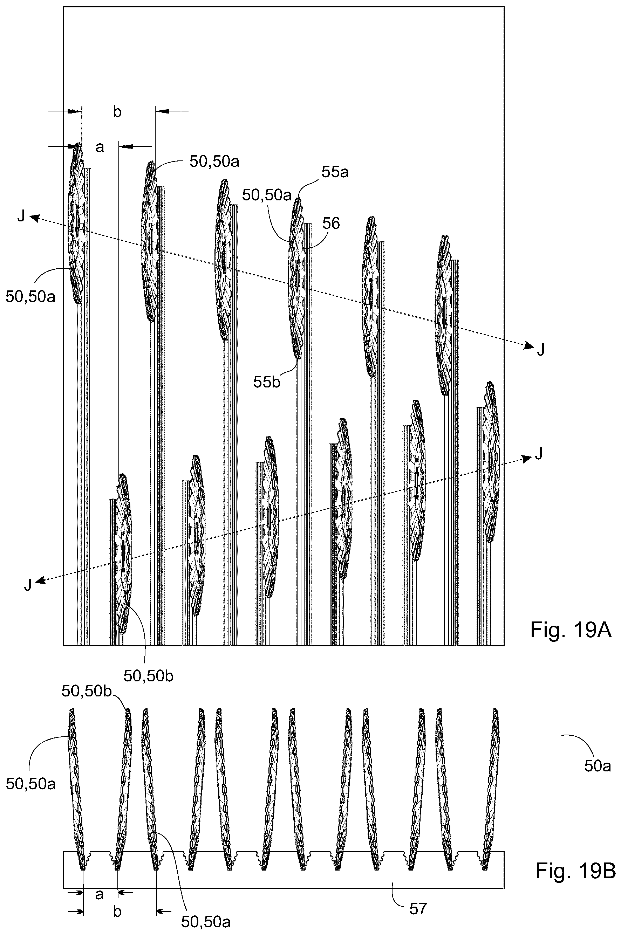

Fig. 19A and Fig. 19B depict how annular harrow tools **50a** (only three labeled) in front gangs and annular harrow tools **50b** (only one labeled) in rear gangs are arranged when the annular harrow tools **50** are in a least aggressive tillage position and the vertical toolbar planes **J-J** of the gangs are angled away from the transverse axis of the tillage implement. In the least aggressive tillage position, diametrically opposed points **55a, 55b** (only one each labeled) on the circumferential cutting edge **56** (only one labeled) of the annular harrow tools **50** define a vertical harrow tool plane that is parallel to the longitudinal axis of the implement, which is parallel to the direction of motion of the implement. Soil disturbance when the annular harrow tools **50** are in the least aggressive tillage position is shown in Fig. 19B, which shows that in the least aggressive position, the annular harrow tools **50** slice to reduce size of residue in soil **57,** but provide minimal tillage. Further, a transverse distance **b** between the cutting points of adjacent annular harrow tools **50** on the same gang is the same from tool-to-tool, and a transverse distance **a** between the cutting points of adjacent annular harrow tools **50** on different gangs is about half of the distance **b,** which results in cutting lines that transversely essentially equidistant apart by the distance **a.** Further, longitudinal separation between the vertical toolbar planes **J-J** of the front and rear gangs is small at one end of the gangs and large at the other end. The small longitudinal separation at the one end does not affect performance because the annular harrow tools **50** only minimally till the soil **57** so large amounts of soil flow through the implement are not required and no plugging at the end with smaller separation of the gangs will occur.

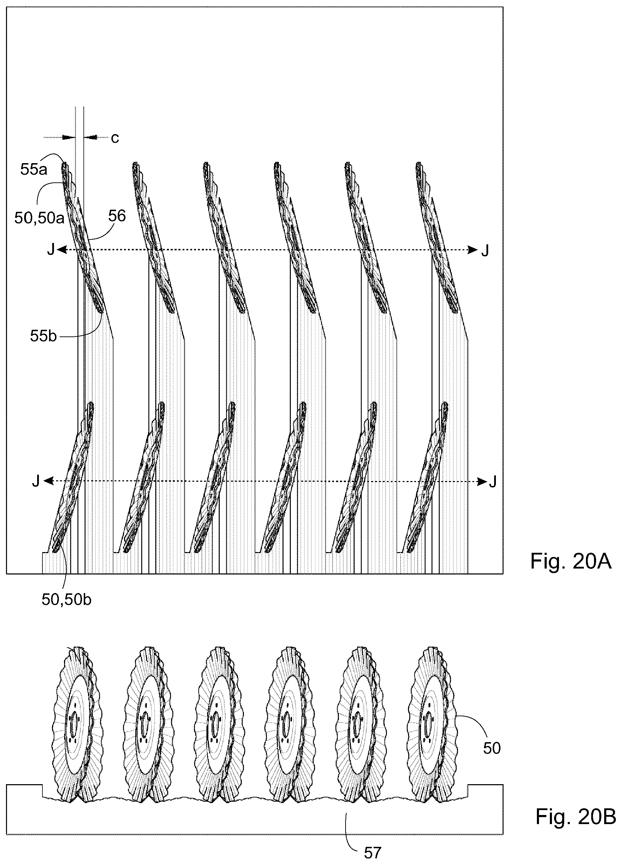

Fig. 20A and Fig. 20B depict how annular harrow tools **50a** (only one labeled) in the front gangs and annular harrow tools **50b** (only one labeled) in rear gangs are arranged when the annular harrow tools **50** are in a most aggressive tillage position and the vertical toolbar planes **J-J** of the gangs are parallel or almost parallel with the transverse axis of the tillage implement. In the least aggressive tillage position, diametrically opposed points **55a, 55b** (only one each labeled) on the circumferential cutting edge **56** (only one labeled) of the annular harrow tools **50** define a vertical harrow tool plane that is angled away from the longitudinal axis of the implement. Soil disturbance when the annular harrow tools **50** are in the most aggressive tillage position is shown in Fig. 20B, which shows that in the most aggressive position, the annular harrow tools **50** create full shear across the soil **57** fully disturbing the soil **57** for maximum tillage. Further a transverse distance c between the cutting points of adjacent annular harrow tools **50** on different gangs is small, while the transverse distance between the cutting points of adjacent annular harrow tools **50** on the same gang is large. Furthermore, longitudinal separation between the vertical toolbar planes **J-J** of the front and rear gangs is the same along the lengths of the gangs, and is large enough to permit the highly tilled soil **57** to flow through the implement without plugging the implement.

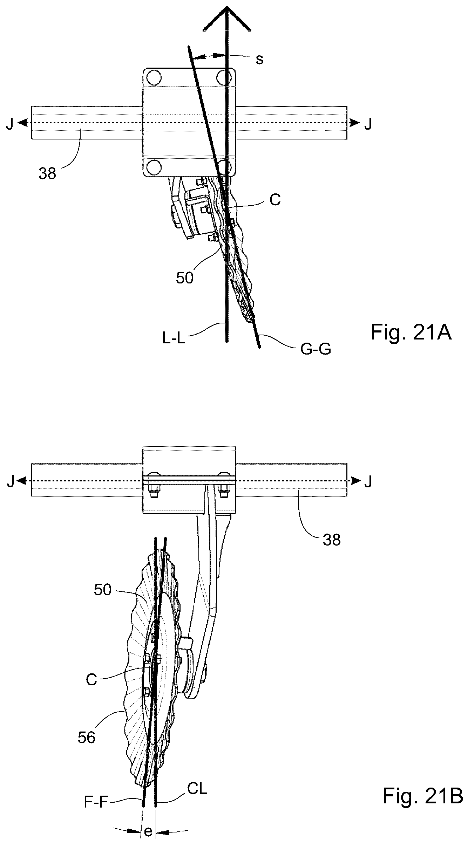

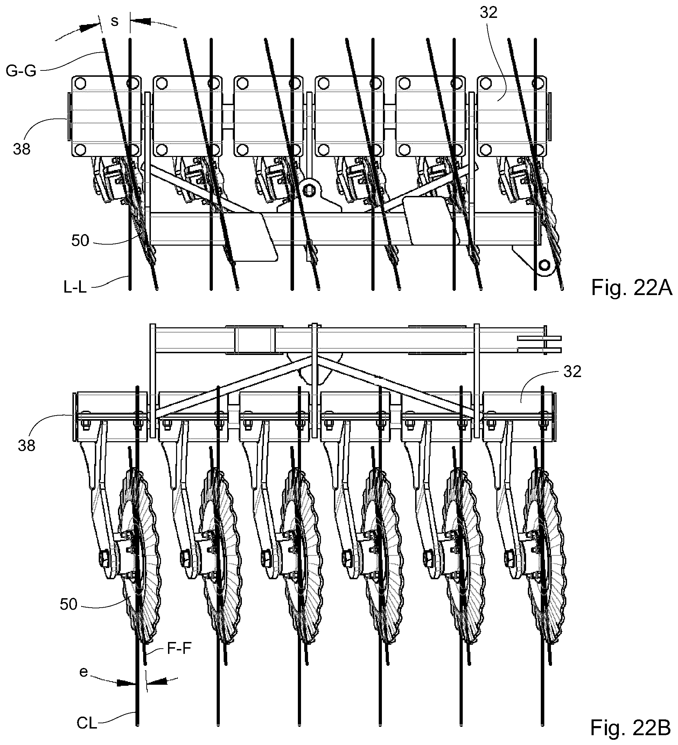

Fig. 21A, Fig. 21B, Fig. 22A and Fig. 22B illustrate annular harrow tools **50** mounted at compound angles on a toolbar **38** illustrating that the gangs may be arranged similarly using annular harrow tools **50** mounted at compound angles. Fig. 21A and Fig. 21B depicts a single angle annular harrow tool **50** mounted on the toolbar **38** at compound angles where angle **s** is an angle relation between a vertical plane **G-G** through a center **C** of the annular harrow tool **50** and the direction of travel of the implement (i.e. the longitudinal axis **L-L**), and angle **e** is an angle relation between a vertical axis **CL** through the center **C** of the annular harrow tool **50** and a face plane of the annular harrow tool **50** defined by the cutting edge **56.** With an annular harrow tool mounted at compound angles, the face plane of the annular harrow tool is non-parallel to the horizontal plane and both vertical planes as defined by the ground. Fig. 22A and Fig. 22B depict a gang **32** of annular harrow tools **50** (only one labeled) mounted on the toolbar **38** illustrating the angle **s** (only one labeled) that the compound angle mounted annular harrow tools **50** make with respect to the longitudinal axis **L-L** of the tillage implement (Fig. 22A), and illustrating the angle **e** that the compound angle mounted harrow tools **50** make with respect to the vertical axis **CL** of the tillage implement

The novel features will become apparent to those of skill in the art upon examination of the description. It should be understood, however, that the scope of the claims should not be limited by the embodiments, but should be given the broadest interpretation consistent with the wording of the claims.

## Claims

1. A tillage implement (10, 100) comprising:
a frame (12) connectable to a towing vehicle (1), the frame comprising a plurality of elongated transverse frame elements (13, 13a, 13b, 13c, 13d) and a plurality of elongated longitudinal frame elements (14, 14a, 14b, 114a, 114b) connected to the plurality of elongated transverse frame elements (13, 13a, 13b, 13c, 13d), the frame (12) having a horizontal longitudinal axis parallel to a direction of travel of the tillage implement (10, 100) and a horizontal transverse axis perpendicular to the horizontal longitudinal axis when the tillage implement (10, 100) is in a deployed configuration to till a field;
a first gang (32a, 132a) comprising a first toolbar (38a) and a first plurality of annular harrow tools (50, 50a, 150) mounted on the first toolbar (38a), the first toolbar (38a) having a first vertical toolbar plane through a length of the first toolbar (38a), each annular harrow tool (50, 50a, 150) of the first plurality of annular harrow tools having a first rotating circumferential cutting edge (56) whereby a first vertical harrow tool plane passes through two diametrically opposed points (55a, 55b) on the first circumferential cutting edge (56), the first toolbar (38a) pivotally mounted on the frame (12) to be rotatable about a first vertical rotation axis;
a second gang (32b, 132b) comprising a second toolbar (38b) and a second plurality of annular harrow tools (50, 50b, 50bₓ, 50b_{y}, 150) mounted on the second toolbar (38b), the second toolbar (38b) having a second vertical toolbar plane through a length of the second toolbar, each annular harrow tool (50, 50b, 50bₓ, 50b_{y}, 150) of the second plurality of annular harrow tools having a second rotating circumferential cutting edge (56) whereby a second vertical harrow tool plane passes through two diametrically opposed points (55a, 55b) on the second circumferential cutting edge (56), the second toolbar (38b) pivotally mounted on the frame (12) to be rotatable about a second vertical rotation axis;
a linkage mechanism (60, 80, 180) disposed longitudinally between the first and second toolbars, the linkage mechanism (60, 80, 180) comprising a plurality of pivotally connected linkage arms (64), the first and second toolbars each pivotally connected to the linkage mechanism (60, 80, 180), the linkage mechanism configured to simultaneously rotate the first toolbar (38a) about the first vertical rotation axis and rotate the second toolbar (38b) about the second vertical rotation axis in an opposite rotational direction as the first toolbar (38a) during operation of the linkage mechanism;
**characterized in that** there is provided
at least one wheel (17, 21, 23) for supporting the frame (12) on the field, the at least one wheel (17, 21, 23) mounted on the frame longitudinally forward of both the first and second gang or longitudinally rearward of both the first and second gang.

2. The implement (10, 100) of claim 1, further comprising an actuator (35, 36, 61, 81, 181) mounted on the frame (12) and connected to at least one of the linkage arms (64) of the linkage mechanism (60, 80, 180), wherein operation of the actuator (35, 36, 61, 81, 181) operates the linkage mechanism (60, 80, 180) and the actuator (35, 36, 61, 81, 181) is controlled from the towing vehicle (1) towing the implement (10, 100).

3. The implement (10, 100) of claim 2, wherein the actuator (35, 36, 61, 81, 181) comprises a hydraulic cylinder or a linear actuator.

4. The implement (10, 100) of claim 2 or claim 3, wherein:
the first gang (32a) comprises a first gang assembly (70, 90) comprising the first toolbar (38a), a first support bar opposed to the first toolbar (38a) and at least two first support brackets (74) rigidly connecting the first toolbar (38a) to the first support bar;
the second gang (32b) comprises a second gang assembly (70, 90) comprising the second toolbar (38b), a second support bar opposed to the second toolbar (38b) and at least two second support brackets (74) rigidly connecting the second toolbar (38b) to the second support bar;
the plurality of linkage arms (64) comprises a transversely oriented common control rod (62, 82, 182) pivotally connected to the first and second gangs through at least two connecting arms (65, 85, 185) pivotally mounted on the control rod (62); and,
the actuator (35, 36, 61, 81, 181) is pivotally connected to the control rod (62) whereby actuation of the actuator causes the first and second toolbars (38a, 38b) to rotate in opposite rotational directions about the first and second vertical rotation axes, respectively.

5. The implement (10, 100) of claim 4, wherein:
the actuator (35, 36, 61, 81, 181) is pivotally attached to the first support bar and the control rod (62) at a common location (66);
the at least two connecting arms (65, 85, 185) comprises one connecting arm (65, 85, 185) pivotally connected to the control rod (62, 82, 182) and the second support bar; and,
the first and second gang assemblies (70) each comprise at least two gang assembly linkage arms (64), each of the gang assembly arms pivotally connected to the first support bar and at least one of the transverse frame elements (13, 13a, 13b, 13c, 13d).

6. The implement (10, 100) of claim 4, wherein:
the at least two connecting arms (65, 85, 185) comprises two connecting arms (65, 85, 185), one of the connecting arms (65, 85, 185) pivotally connected to the control rod (62, 82, 182) and the first support bar and one of the connecting arms (65, 85, 185) pivotally connected to the control rod (62, 82, 182) and the second support bar, the two connecting arms (65, 85, 185) pivotally connected to the control rod (62, 82, 182) at a common location; and,
the first and second support bars are each rotatably connected to the transverse frame elements (13, 13a, 13b, 13c, 13d) at first and second pivot points, respectively, through which the first and second vertical rotation axes pass, respectively.

7. The implement (10, 100) of claim 4, wherein the plurality of linkage arms (64) comprises a bell crank control linkage.

8. The implement (10, 100) of any one of claims 1 to 7, wherein the at least one wheel (17, 21, 23) comprises a plurality of wheels mounted longitudinally forward of both the first and second gang (32a, 32b).

9. The implement (10, 100) of any one of claims 1 to 8, wherein:
the first and second pluralities of annular harrow tools (50, 50a, 50b, 50bx, 50by, 150) are in a least aggressive tillage position when the first and second vertical harrow tool planes are parallel to the longitudinal axis;
the first vertical harrow tool planes are parallel to and transversely offset equidistantly or nearly equidistantly from adjacent second vertical harrow tool planes when the first and second pluralities of annular harrow tools (50, 50a, 50b, 50bₓ, 50b_{y}, 150) are in the least aggressive tillage position; and,
relative transverse positions of points at which the rotating circumferential cutting edges (56) of the first and second pluralities of annular harrow tools first contact the field shift transversely to provide the equidistant or nearly equidistant transverse offset when the first and second gangs (32a, 32b) are rotated so that the first and second pluralities of annular harrow tools are in the least aggressive tillage position.

10. The implement (10, 100) of any one of claims 1 to 9, wherein each of the first and second gangs are rotatable through an angle of 16°.

11. The implement (10, 100) of any one of claims 1 to 10, wherein when the first and second gangs (32a, 32b) each form an angle of 0° with respect to the horizontal transverse axis, the first vertical harrow tool plane forms an angle in a range of from 0° to 16° with respect to the horizontal longitudinal axis and the second vertical harrow tool plane forms an angle in a range of from 0° to -16° with respect to the horizontal longitudinal axis.

12. The implement (10, 100) of any one of claims 1 to 10, wherein when the first and second gangs (32a, 32b) each form an angle of 0° with respect to the horizontal transverse axis, the first vertical harrow tool plane forms an angle in a range of from 8° to 16° with respect to the horizontal longitudinal axis and the second vertical harrow tool plane forms an angle in a range of from -8° to -16° with respect to the horizontal longitudinal axis.

13. The implement (10, 100) of any one of claims 1 to 10, wherein: the first vertical harrow tool plane forms an angle in a range of from 0° to 16° with respect to a first line normal to the first vertical toolbar plane; and, the second vertical harrow tool plane forms an angle in a range of from 0° to 16° with respect to a second line normal to the second vertical toolbar plane.

14. The implement (10, 100) of any one of claims 1 to 10, wherein: the first vertical harrow tool plane forms an angle in a range of from 8° to 16° with respect to a first line normal to the first vertical toolbar plane; and, the second vertical harrow tool plane forms an angle in a range of from 8° to 16° with respect to a second line normal to the second vertical toolbar plane.

15. The implement (10, 100) of any one of claims 1 to 14, wherein the frame (12) comprises a wing section (22, 24, 122) on which the first and second gangs (32a, 32b) are mounted and a wing support, wherein the wing section (22, 24, 122) is pivotally mounted on the wing support and the wing support is pivotally mounted on the frame (12) such that the wing section (22, 24, 122) and the wing support are pivotable between the deployed configuration where the wing section is horizontally oriented and the first and second gangs are oriented transversely to the longitudinal axis and a stowed position where the wing section is vertically oriented and the first and second gangs are oriented parallel to the longitudinal axis.

16. The implement (10, 100) of claim 15, wherein the wing section further comprises a third gang (32c) and a fourth gang (32d) substantially identical to the first gang (32a) and the second gang (32b), respectively, and transversely spaced-apart from the first and second gangs, the third and fourth gangs connected to the linkage mechanism (60, 80, 180), the linkage mechanism (60, 80, 180) disposed longitudinally between the third and fourth gangs.

17. The implement (10, 100) of claim 15 or claim 16, wherein the wing support is a center section (20) of the frame, the wing section is a first wing section (22, 122) pivotally mounted on a first side of the center section (20), and wherein the frame further comprises a second wing section (24) substantially identical to the first wing section, the second wing section (24) pivotally mounted on the center section on a second side transversely opposite the first side.

## Patentansprüche

1. Ein Bodenbearbeitungsgerät (10, 100) umfassend:
einen Rahmen (12), der mit einem Zugfahrzeug (1) verbunden werden kann, wobei der Rahmen eine Vielzahl von länglichen Querrahmenelementen (13, 13a, 13b, 13c, 13d) und eine Vielzahl von länglichen Längsrahmenelementen (14, 14a, 14b, 114a, 114b) umfasst, die mit der Vielzahl von länglichen Querrahmenelementen (13, 13a, 13b, 13c, 13d) verbunden sind, wobei der Rahmen (12) eine horizontale Längsachse parallel zu einer Fahrtrichtung des Bodenbearbeitungsgeräts (10, 100) und eine horizontale Querachse senkrecht zu der horizontalen Längsachse hat, wenn das Bodenbearbeitungsgerät (10, 100) in einer ausgefahrenen Konfiguration zum Bearbeiten eines Feldes ist;
eine erste Werkzeuggruppe (32a, 132a) umfassend eine erste Werkzeugleiste (38a) und eine erste Vielzahl von ringförmigen Eggenwerkzeugen (50, 50a, 150), die an der ersten Werkzeugleiste (38a) montiert sind, wobei die erste Werkzeugleiste (38a) eine erste vertikale Werkzeugleistenebene durch eine Länge der ersten Werkzeugleiste (38a) hat, wobei jedes ringförmige Eggenwerkzeug (50, 50a, 150) der ersten Vielzahl von ringförmigen Eggenwerkzeugen eine erste rotierende Umfangsschneidekante (56) hat, wodurch eine erste vertikale Eggenwerkzeugebene durch zwei diametral gegenüberliegende Punkte (55a, 55b) an der ersten Umfangsschneidekante (56) verläuft, wobei die erste Werkzeugleiste (38a) schwenkbar an dem Rahmen (12) montiert ist, um um eine erste vertikale Drehachse drehbar zu sein;
eine zweite Werkzeuggruppe (32b, 132b) umfassend eine zweite Werkzeugleiste (38b) und eine zweite Vielzahl von ringförmigen Eggenwerkzeugen (50, 50b, 50bₓ, 50b_{y}, 150), die an der zweiten Werkzeugleiste (38b) montiert sind, wobei die zweite Werkzeugleiste (38b) eine zweite vertikale Werkzeugleistenebene durch eine Länge der zweiten Werkzeugleiste hat, wobei jedes ringförmige Eggenwerkzeug (50, 50b, 50bₓ, 50b_{y}, 150) der zweiten Vielzahl von ringförmigen Eggenwerkzeugen eine zweite rotierende Umfangsschneidekante (56) hat, wodurch eine zweite vertikale Eggenwerkzeugebene durch zwei diametral gegenüberliegende Punkte (55a, 55b) an der zweiten Umfangsschneidekante (56) verläuft, wobei die zweite Werkzeugleiste (38b) schwenkbar an dem Rahmen (12) montiert ist, um um eine zweite vertikale Drehachse drehbar zu sein;
einen Verbindungsmechanismus (60, 80, 180), der in Längsrichtung zwischen der ersten und der zweiten Werkzeugleiste angeordnet ist, wobei der Verbindungsmechanismus (60, 80, 180) eine Vielzahl von schwenkbar verbundenen Verbindungsarmen (64) umfasst, wobei die erste und die zweite Werkzeugleiste jeweils schwenkbar mit dem Verbindungsmechanismus (60, 80, 180) verbunden sind, wobei der Verbindungsmechanismus konfiguriert ist, um gleichzeitig die erste Werkzeugleiste (38a) um die erste vertikale Drehachse zu drehen und die zweite Werkzeugleiste (38b) um die zweite vertikale Drehachse in einer entgegengesetzten Drehrichtung in Bezug auf die erste Werkzeugleiste (38a) während des Betriebs des Verbindungsmechanismus zu drehen;
**dadurch gekennzeichnet, dass** Folgendes bereitgestellt wird
mindestens ein Rad (17, 21, 23) zum Stützen des Rahmens (12) auf dem Feld, wobei das mindestens eine Rad (17, 21, 23) in Längsrichtung vor sowohl der ersten als auch der zweiten Werkzeuggruppe oder in Längsrichtung hinter sowohl der ersten als auch der zweiten Werkzeuggruppe an dem Rahmen montiert ist.

2. Das Gerät (10, 100) von Anspruch 1, ferner umfassend einen Aktor (35, 36, 61, 81, 181), der an dem Rahmen (12) montiert und mit mindestens einem der Verbindungsarme (64) des Verbindungsmechanismus (60, 80, 180) verbunden ist, wobei der Betrieb des Aktors (35, 36, 61, 81, 181) den Verbindungsmechanismus (60, 80, 180) betätigt und der Aktor (35, 36, 61, 81, 181) von dem Zugfahrzeug (1) gesteuert wird, das das Gerät (10, 100) zieht.

3. Das Gerät (10, 100) von Anspruch 2, wobei der Aktor (35, 36, 61, 81, 181) einen Hydraulikzylinder oder einen Linearaktor umfasst.

4. Das Gerät (10, 100) von Anspruch 2 oder Anspruch 3, wobei:
die erste Werkzeuggruppe (32a) eine erste Werkzeuggruppenanordnung (70, 90) umfasst, die die erste Werkzeugleiste (38a), eine erste Stützstange, die der ersten Werkzeugleiste (38a) gegenüberliegt, und mindestens zwei erste Stützhalterungen (74) umfasst, die die erste Werkzeugleiste (38a) starr mit der ersten Stützstange verbinden;
die zweite Werkzeuggruppe (32b) eine zweite Werkzeuggruppenanordnung (70, 90) umfasst, die die zweite Werkzeugleiste (38b), eine zweite Stützstange, die der zweiten Werkzeugleiste (38b) gegenüberliegt, und mindestens zwei zweite Stützhalterungen (74) umfasst, die die zweite Werkzeugleiste (38b) starr mit der zweiten Stützstange verbinden;
die Vielzahl von Verbindungsarmen (64) eine quer ausgerichtete gemeinsame Steuerstange (62, 82, 182) umfasst, die durch mindestens zwei Verbindungsarme (65, 85, 185), die an der Steuerstange (62) schwenkbar angebracht sind, schwenkbar mit der ersten und zweiten Werkzeuggruppe verbunden ist; und
der Aktor (35, 36, 61, 81, 181) schwenkbar mit der Steuerstange (62) verbunden ist, wodurch eine Betätigung des Aktors bewirkt, dass sich die erste und die zweite Werkzeugleiste (38a, 38b) in entgegengesetzte Drehrichtungen um die erste und die zweite vertikale Drehachse drehen.

5. Das Gerät (10, 100) von Anspruch 4, wobei:
der Aktor (35, 36, 61, 81, 181) schwenkbar an der ersten Stützstange und der Steuerstange (62) an einer gemeinsamen Stelle (66) angebracht ist;
die mindestens zwei Verbindungsarme (65, 85, 185) einen Verbindungsarm (65, 85, 185) umfassen, der schwenkbar mit der Steuerstange (62, 82, 182) und der zweiten Stützstange verbunden ist; und
die erste und die zweite Werkzeuggruppenbaugruppe (70) jeweils mindestens zwei Werkzeuggruppenanordnungsverbindungsarme (64) umfassen, wobei jeder der Werkzeuggruppenanordnungsarme schwenkbar mit der ersten Stützstange und mindestens einem der Querrahmenelemente (13, 13a, 13b, 13c, 13d) verbunden ist.

6. Das Gerät (10, 100) von Anspruch 4, wobei:
die mindestens zwei Verbindungsarme (65, 85, 185) zwei Verbindungsarme (65, 85, 185) umfassen, wobei einer der Verbindungsarme (65, 85, 185) schwenkbar mit der Steuerstange (62, 82, 182) und der ersten Stützstange verbunden ist und einer der Verbindungsarme (65, 85, 185) schwenkbar mit der Steuerstange (62, 82, 182) und der zweiten Stützstange verbunden ist, wobei die zwei Verbindungsarme (65, 85, 185) an einer gemeinsamen Stelle schwenkbar mit der Steuerstange (62, 82, 182) verbunden sind; und
die erste und die zweite Stützstange jeweils an einem ersten und einem zweiten Drehpunkt, durch welche die erste und die zweite vertikale Drehachse verlaufen, drehbar mit den Querrahmenelementen (13, 13a, 13b, 13c, 13d) verbunden sind.

7. Das Gerät (10, 100) von Anspruch 4, wobei die Vielzahl von Verbindungsarmen (64) ein Winkelhebelsteuergestänge umfasst.

8. Das Gerät (10, 100) von einem der Ansprüche 1 bis 7, wobei das mindestens eine Rad (17, 21, 23) eine Vielzahl von Rädern umfasst, die in Längsrichtung vor sowohl der ersten als auch der zweiten Werkzeuggruppe (32a, 32b) montiert sind.

9. Das Gerät (10, 100) von einem der Ansprüche 1 bis 8, wobei:
die erste und die zweite Vielzahl von ringförmigen Eggenwerkzeugen (50, 50a, 50b, 50bx, 50by, 150) in einer am wenigsten aggressiven Bodenbearbeitungsposition sind, wenn die erste und die zweite vertikale Eggenwerkzeugebenen parallel zu der Längsachse sind;
die ersten vertikalen Eggenwerkzeugebenen parallel zu und quer äquidistant oder nahezu äquidistant von benachbarten zweiten vertikalen Eggenwerkzeugebenen versetzt sind, wenn die erste und die zweite Vielzahl von ringförmigen Eggenwerkzeugen (50, 50a, 50b, 50bₓ, 50b_{y}, 150) in der am wenigsten aggressiven Bodenbearbeitungsposition sind; und
relative Querpositionen von Punkten, an denen die rotierenden Umfangsschneidkanten (56) der ersten und der zweiten Vielzahl von ringförmigen Eggenwerkzeugen zuerst das Feld berühren, quer verschoben werden, um den äquidistanten oder nahezu äquidistanten Querversatz bereitzustellen, wenn die erste und die zweite Werkzeuggruppe (32a, 32b) gedreht werden, so dass die erste und die zweite Vielzahl von ringförmigen Eggenwerkzeugen in der am wenigsten aggressiven Bodenbearbeitungsposition sind.

10. Das Gerät (10, 100) von einem der Ansprüche 1 bis 9, wobei jede der ersten und der zweiten Werkzeuggruppe um einen Winkel von 16° drehbar ist.

11. Das Gerät (10, 100) von einem der Ansprüche 1 bis 10, wobei, wenn die erste und die zweite Werkzeuggruppe (32a, 32b) jeweils einen Winkel von 0° in Bezug auf die horizontale Querachse bilden, die erste vertikale Eggenwerkzeugebene einen Winkel in einem Bereich von 0° bis 16° in Bezug auf die horizontale Längsachse bildet und die zweite vertikale Eggenwerkzeugebene einen Winkel in einem Bereich von 0° bis -16° in Bezug auf die horizontale Längsachse bildet.

12. Das Gerät (10, 100) von einem der Ansprüche 1 bis 10, wobei, wenn die erste und die zweite Werkzeuggruppe (32a, 32b) jeweils einen Winkel von 0° in Bezug auf die horizontale Querachse bilden, die erste vertikale Eggenwerkzeugebene einen Winkel in einem Bereich von 8° bis 16° in Bezug auf die horizontale Längsachse bildet und die zweite vertikale Eggenwerkzeugebene einen Winkel in einem Bereich von -8° bis -16° in Bezug auf die horizontale Längsachse bildet.

13. Das Gerät (10, 100) von einem der Ansprüche 1 bis 10, wobei: die erste vertikale Eggenwerkzeugebene einen Winkel in einem Bereich von 0° bis 16° in Bezug auf eine erste Linie senkrecht zu der ersten vertikalen Werkzeugleistenebene bildet; und die zweite vertikale Eggenwerkzeugebene einen Winkel in einem Bereich von 0° bis 16° in Bezug auf eine zweite Linie senkrecht zu der zweiten vertikalen Werkzeugleistenebene bildet.

14. Das Gerät (10, 100) von einem der Ansprüche 1 bis 10, wobei: die erste vertikale Eggenwerkzeugebene einen Winkel in einem Bereich von 8° bis 16° in Bezug auf eine erste Linie senkrecht zu der ersten vertikalen Werkzeugleistenebene bildet; und die zweite vertikale Eggenwerkzeugebene einen Winkel in einem Bereich von 8° bis 16° in Bezug auf eine zweite Linie senkrecht zu der zweiten vertikalen Werkzeugleistenebene bildet.

15. Das Gerät (10, 100) von einem der Ansprüche 1 bis 14, wobei der Rahmen (12) einen Flügelabschnitt (22, 24, 122), an dem die erste und die zweite Werkzeuggruppe (32a, 32b) angebracht sind, und eine Flügelstütze umfasst, wobei der Flügelabschnitt (22, 24, 122) schwenkbar an der Flügelstütze angebracht ist und die Flügelstütze schwenkbar an dem Rahmen (12) angebracht ist, so dass der Flügelabschnitt (22, 24, 122) und die Flügelstütze zwischen der ausgefahrenen Konfiguration, in der der Flügelabschnitt horizontal ausgerichtet ist und die erste und die zweite Werkzeuggruppe quer zu der Längsachse ausgerichtet sind, und einer verstauten Position, in der der Flügelabschnitt vertikal ausgerichtet ist und die erste und die zweite Werkzeuggruppe parallel zu der Längsachse ausgerichtet sind, schwenkbar sind.

16. Das Gerät (10, 100) von Anspruch 15, wobei der Flügelabschnitt ferner eine dritte Werkzeuggruppe (32c) und eine vierte Werkzeuggruppe (32d) umfasst, die im Wesentlichen mit der ersten Werkzeuggruppe (32a) und der zweiten Werkzeuggruppe (32b) identisch sind und in Querrichtung von der ersten und der zweiten Werkzeuggruppe beabstandet sind, wobei die dritte und die vierte Werkzeuggruppe mit dem Verbindungsmechanismus (60, 80, 180) verbunden sind, wobei der Verbindungsmechanismus (60, 80, 180) in Längsrichtung zwischen der dritten und der vierten Werkzeuggruppe angeordnet ist.

17. Das Gerät (10, 100) von Anspruch 15 oder Anspruch 16, wobei die Flügelstütze ein Mittelabschnitt (20) des Rahmens ist, der Flügelabschnitt ein erster Flügelabschnitt (22, 122) ist, der schwenkbar an einer ersten Seite des Mittelabschnitts (20) montiert ist, und wobei der Rahmen ferner einen zweiten Flügelabschnitt (24) umfasst, der im Wesentlichen mit dem ersten Flügelabschnitt identisch ist, wobei der zweite Flügelabschnitt (24) schwenkbar an dem Mittelabschnitt an einer zweiten Seite quer gegenüber der ersten Seite montiert ist.

## Revendications

1. Un outil de travail du sol (10, 100) comprenant :
un cadre (12) pouvant être connecté à un véhicule de remorquage (1), le cadre comprenant une pluralité d'éléments de cadre transversaux allongés (13, 13a, 13b, 13c, 13d) et une pluralité d'éléments de cadre longitudinaux allongés (14, 14a, 14b, 114a, 114b) connectés à la pluralité d'éléments de cadre transversaux allongés (13, 13a, 13b, 13c, 13d), le cadre (12) ayant un axe longitudinal horizontal parallèle à une direction de déplacement de l'outil de travail du sol (10, 100) et un axe transversal horizontal perpendiculaire à l'axe longitudinal horizontal lorsque l'outil de travail du sol (10, 100) est dans une configuration déployée pour labourer un champ ;
un premier groupe d'outils (32a, 132a) comprenant une première barre d'outils (38a) et une première pluralité d'outils de herse annulaires (50, 50a, 150) montés sur la première barre d'outils (38a), la première barre d'outils (38a) ayant un premier plan de barre d'outils vertical sur une longueur de la première barre d'outils (38a), chaque outil de herse annulaire (50, 50a, 150) de la première pluralité d'outils de herse annulaires ayant un premier bord de coupe circonférentiel rotatif (56) moyennant quoi un premier plan d'outil de herse vertical passe par deux points diamétralement opposés (55a, 55b) sur le premier bord de coupe circonférentiel (56), la première barre d'outils (38a) montée de manière pivotante sur le cadre (12) de manière à pouvoir tourner autour d'un premier axe de rotation vertical ;
un second groupe d'outils (32b, 132b) comprenant une seconde barre d'outils (38b) et une seconde pluralité d'outils de herse annulaires (50, 50b, 50bₓ, 50b_{y}, 150) montés sur la seconde barre d'outils (38b), la seconde barre d'outils (38b) ayant un second plan de barre d'outils vertical sur une longueur de la seconde barre d'outils, chaque outil de herse annulaire (50, 50b, 50bₓ, 50b_{y}, 150) de la seconde pluralité d'outils de herse annulaires ayant un second bord de coupe circonférentiel rotatif (56), moyennant quoi un second plan d'outil de herse vertical passe par deux points diamétralement opposés (55a, 55b) sur le second bord de coupe circonférentiel (56), la seconde barre d'outils (38b) étant montée de manière pivotante sur le cadre (12) de manière à pouvoir tourner autour d'un second axe de rotation vertical ;
un mécanisme de liaison (60, 80, 180) disposé longitudinalement entre les première et seconde barres d'outils, le mécanisme de liaison (60, 80, 180) comprenant une pluralité de bras de liaison reliés de manière pivotante (64), les première et seconde barres d'outils étant chacune reliées de manière pivotante au mécanisme de liaison (60, 80, 180), le mécanisme de liaison étant configuré pour faire tourner simultanément la première barre d'outils (38a) autour du premier axe de rotation vertical et faire tourner la seconde barre d'outils (38b) autour du second axe de rotation vertical dans un sens de rotation opposé à celui de la première barre d'outils (38a) pendant le fonctionnement du mécanisme de liaison ;
**caractérisé en ce que** ceci est prévu
au moins une roue (17, 21, 23) pour supporter le cadre (12) sur le terrain, la au moins une roue (17, 21, 23) étant montée sur le cadre longitudinalement à l'avant à la fois du premier et du second groupe d'outils ou longitudinalement à l'arrière à la fois du premier et du second groupe d'outils.

2. L'outil (10, 100) de la revendication 1, comprenant en outre un actionneur (35, 36, 61, 81, 181) monté sur le cadre (12) et connecté à au moins l'un des bras de liaison (64) du mécanisme de liaison (60, 80, 180), dans lequel le fonctionnement de l'actionneur (35, 36, 61, 81, 181) actionne le mécanisme de liaison (60, 80, 180) et l'actionneur (35, 36, 61, 81, 181) est commandé à partir du véhicule de remorquage (1) remorquant l'outil (10, 100).

3. L'outil (10, 100) de la revendication 2, dans lequel l'actionneur (35, 36, 61, 81, 181) comprend un vérin hydraulique ou un actionneur linéaire.

4. L'outil (10, 100) de la revendication 2 ou de la revendication 3, dans lequel :
le premier groupe d'outils (32a) comprend un premier ensemble de groupe d'outils (70, 90) comprenant la première barre d'outils (38a), une première barre de support opposée à la première barre d'outils (38a) et au moins deux premiers supports (74) reliant rigidement la première barre d'outils (38a) à la première barre de support ;
le second groupe d'outils (32b) comprend un second ensemble de groupe d'outils (70, 90) comprenant la seconde barre d'outils (38b), une seconde barre de support opposée à la seconde barre d'outils (38b) et au moins deux seconds supports (74) reliant rigidement la seconde barre d'outils (38b) à la seconde barre de support ;
la pluralité de bras de liaison (64) comprend une tige de commande (62, 82, 182) commune orientée transversalement reliée de manière pivotante aux premier et second groupe d'outils par l'intermédiaire d'au moins deux bras de liaison (65, 85, 185) montés de manière pivotante sur la tige de commande (62) ; et,
l'actionneur (35, 36, 61, 81, 181) est connecté de manière pivotante à la tige de commande (62), moyennant quoi l'actionnement de l'actionneur provoque la rotation des première et seconde barres d'outils (38a, 38b) dans des sens de rotation opposés autour des premier et second axes de rotation verticaux, respectivement.

5. L'outil (10, 100) de la revendication 4, dans lequel :
l'actionneur (35, 36, 61, 81, 181) est fixé de manière pivotante à la première barre de support et à la tige de commande (62) à un emplacement commun (66) ;
les au moins deux bras de liaison (65, 85, 185) comprennent un bras de liaison (65, 85, 185) connecté de manière pivotante à la tige de commande (62, 82, 182) et à la seconde barre de support ; et,
les premier et second ensembles de groupe d'outils (70) comprennent chacun au moins deux bras de liaison d'ensemble de groupe d'outils (64), chacun des bras d'ensemble de groupe d'outils étant connecté de manière pivotante à la première barre de support et à au moins l'un des éléments de cadre transversaux (13, 13a, 13b, 13c, 13d).

6. L'outil (10, 100) de la revendication 4, dans lequel :
les au moins deux bras de liaison (65, 85, 185) comprennent deux bras de liaison (65, 85, 185), l'un des bras de liaison (65, 85, 185) connecté de manière pivotante à la tige de commande (62, 82, 182) et à la première barre de support et l'un des bras de liaison (65, 85, 185) connecté de manière pivotante à la tige de commande (62, 82, 182) et à la seconde barre de support, les deux bras de liaison (65, 85, 185) connectés de manière pivotante à la tige de commande (62, 82, 182) à un emplacement commun ; et,
les première et seconde barres de support sont chacune connectées de manière rotative aux éléments de cadre transversaux (13, 13a, 13b, 13c, 13d) au niveau des premier et second points de pivot, respectivement, à travers lesquels passent les premier et second axes de rotation verticaux, respectivement.

7. L'outil (10, 100) de la revendication 4, dans lequel la pluralité de bras de liaison (64) comprend une liaison de commande de levier angulaire.

8. L'outil (10, 100) de l'une quelconque des revendications 1 à 7, dans lequel la au moins une roue (17, 21, 23) comprend une pluralité de roues montées longitudinalement à l'avant à la fois du premier et du second groupe d'outils (32a, 32b).

9. L'outil (10, 100) de l'une quelconque des revendications 1 à 8, dans lequel :
les première et seconde pluralités d'outils de herse annulaires (50, 50a, 50b, 50bx, 50by, 150) sont dans une position de travail du sol la moins agressive lorsque les premier et second plans d'outil de herse verticaux sont parallèles à l'axe longitudinal ;
les premiers plans d'outil de herse verticaux sont parallèles et décalés transversalement de manière équidistante ou presque équidistante par rapport aux seconds plans d'outil de herse verticaux adjacents lorsque les première et seconde pluralités d'outils de herse annulaires (50, 50a, 50b, 50bₓ, 50b_{y}, 150) sont dans la position de travail du sol la moins agressive ; et,
des positions transversales relatives de points, auxquels les bords de coupe circonférentiels rotatifs (56) des première et seconde pluralités d'outils de herse annulaires entrent en contact pour la première fois avec le champ, sont décalés transversalement pour fournir le décalage transversal équidistant ou presque équidistant lorsque les premier et second groupe d'outils (32a, 32b) sont tournés de sorte que les première et seconde pluralités d'outils de herse annulaires sont dans la position de travail du sol la moins agressive.

10. L'outil (10, 100) de l'une quelconque des revendications 1 à 9, dans lequel chacun des premier et second groupe d'outils peut tourner d'un angle de 16°.

11. L'outil (10, 100) de l'une quelconque des revendications 1 à 10, dans lequel lorsque les premier et second groupe d'outils (32a, 32b) forment chacun un angle de 0° par rapport à l'axe transversal horizontal, le premier plan d'outil de herse vertical forme un angle dans une plage de 0° à 16° par rapport à l'axe longitudinal horizontal et le second plan d'outil de herse vertical forme un angle dans une plage de 0° à -16° par rapport à l'axe longitudinal horizontal.

12. L'outil (10, 100) de l'une quelconque des revendications 1 à 10, dans lequel lorsque les premier et second groupe d'outils (32a, 32b) forment chacun un angle de 0° par rapport à l'axe transversal horizontal, le premier plan d'outil de herse vertical forme un angle dans une plage de 8° à 16° par rapport à l'axe longitudinal horizontal et le second plan d'outil de herse vertical forme un angle dans une plage de -8° à -16° par rapport à l'axe longitudinal horizontal.

13. L'outil (10, 100) de l'une quelconque des revendications 1 à 10, dans lequel : le premier plan d'outil de herse vertical forme un angle dans une plage de 0° à 16° par rapport à une première ligne normale au premier plan de barre d'outils vertical ; et le second plan d'outil de herse vertical forme un angle dans une plage de 0° à 16° par rapport à une seconde ligne normale au second plan de barre d'outils vertical.

14. L'outil (10, 100) de l'une quelconque des revendications 1 à 10, dans lequel : le premier plan d'outil de herse vertical forme un angle dans une plage de 8° à 16° par rapport à une première ligne normale au premier plan de barre d'outils vertical ; et le second plan d'outil de herse vertical forme un angle dans une plage de 8° à 16° par rapport à une seconde ligne normale au second plan de barre d'outils vertical.

15. L'outil (10, 100) de l'une quelconque des revendications 1 à 14, dans lequel le cadre (12) comprend une section d'aile (22, 24, 122) sur laquelle les premier et second groupes d'outils (32a, 32b) sont montés et un support d'aile, dans lequel la section d'aile (22, 24, 122) est montée de manière pivotante sur le support d'aile et le support d'aile est monté de manière pivotante sur le cadre (12) de sorte que la section d'aile (22, 24, 122) et le support d'aile peuvent pivoter entre la configuration déployée où la section d'aile est orientée horizontalement et les premier et second groupes d'outils sont orientés transversalement à l'axe longitudinal et une position rangée où la section d'aile est orientée verticalement et les premier et second groupes d'outils sont orientés parallèlement à l'axe longitudinal.

16. L'outil (10, 100) de la revendication 15, dans lequel la section d'aile comprend en outre un troisième groupe d'outils (32c) et un quatrième groupe d'outils (32d) essentiellement identiques au premier groupe d'outils (32a) et au deuxième groupe d'outils (32b), respectivement, et espacés transversalement des premier et deuxième groupe d'outils, les troisième et quatrième groupe d'outils étant connectés au mécanisme de liaison (60, 80, 180), le mécanisme de liaison (60, 80, 180) étant disposé longitudinalement entre les troisième et quatrième groupe d'outils.

17. L'outil (10, 100) de la revendication 15 ou de la revendication 16, dans lequel le support d'aile est une section centrale (20) du cadre, la section d'aile est une première section d'aile (22, 122) montée de manière pivotante sur un premier côté de la section centrale (20), et dans lequel le cadre comprend en outre une seconde section d'aile (24) essentiellement identique à la première section d'aile, la seconde section d'aile (24) étant montée de manière pivotante sur la section centrale sur un second côté transversalement opposé au premier côté.
